# EUROPEAN PATENT APPLICATION

(11) **EP 4 611 326 A1**
(43) Date of publication of application: **03.09.2025**
(21) Application number: 22965563.4
(22) Date of filing: 18.11.2022
(51) Int. Cl.: H04L 27/00, H04B 1/40

(54) **MULTIPLEXER AND COMMUNICATION DEVICE**

(71) Applicant: Huawei Technologies Co., Ltd., Shenzhen, Guangdong 518129 (CN)
(72) Inventor: PU, Tao, Shenzhen, Guangdong 518129 (CN); LV, Jia, Shenzhen, Guangdong 518129 (CN); FENG, Yun, Shenzhen, Guangdong 518129 (CN); ZHAO, Guoshuai, Shenzhen, Guangdong 518129 (CN); WU, Xipeng, Shenzhen, Guangdong 518129 (CN); HE, Jinliang, Shenzhen, Guangdong 518129 (CN)
(74) Representative: Gill Jennings & Every LLP
(86) International application number: PCT/CN2022/132816
(87) International publication number: WO 2024/103382

(57) **Abstract**

Embodiments of this application disclose a multiplexer and a communication device. The multiplexer includes a transmit port, at least one receive port, at least one antenna port, a filter group, and a switch. A fixed end of the switch is connected to a first TDD filter in the filter group, a first free end of the switch is connected to an output end of a second TDD filter in the filter group, and a second free end of the switch is connected to one of the at least one receive port. The transmit port is connected to an input end of an FDD transmit filter and an input end of the second TDD filter in the filter group, and an output end of an FDD receive filter in the filter group is connected to one of the at least one receive port. An output end of the FDD transmit filter, an input end of the FDD receive filter, and the first TDD filter are each connected to one of the at least one antenna port. According to embodiments of this application, when reliable operating of FDD and TDD is ensured, a multiplexing rate of a port can be improved and a circuit area can be reduced.

## Description

### TECHNICAL FIELD

Embodiments of this application relate to the field of communication technologies, and in particular, to a multiplexer and a communication device.

### BACKGROUND

A full-duplexing technology is classified into time division duplexing (Time Division Duplexing, TDD) and frequency division duplexing (Frequency Division Duplexing, FDD). In a device that supports both the TDD and the FDD, an FDD system and a TDD system easily interfere with each other. Specifically, in a TDD receive slot, a transmit (transmit, TX) channel of the FDD operates continuously, and therefore a non-linear spurious emission generated from an FDD transmit signal easily interferes with a TDD receive frequency band, thereby affecting normal operating of a TDD receiver (receiver, RX). Therefore, to avoid impact of FDD transmission on TDD reception, a plurality of filters in a multiplexer are often needed to suppress a signal in a corresponding frequency band. In addition, the multiplexer further needs to provide different transmit ports for the FDD system and the TDD system to improve isolation between the TDD and the FDD. This prevents, in the TDD receive slot, an FDD transmit spurious emission from being leaked into a TDD receive channel to affect a TDD receive signal.

However, provision of two different transmit ports for the TDD system and the FDD system easily leads to excessive circuit interfaces, an increase of circuit connection lines, and an increase of a circuit area, so that production and manufacturing costs of a device are increased.

Therefore, how to improve a multiplexing rate of a transmit port and reduce a circuit area when ensuring reliable operating of the FDD and the TDD is an urgent problem that needs to be resolved.

### SUMMARY

Embodiments of this application provide a multiplexer and a communication device, so that when reliable operating of FDD and TDD is ensured, a multiplexing rate of a transmit port can be improved, and a circuit area can be reduced.

According to a first aspect, an embodiment of this application provides a multiplexer. The multiplexer includes a transmit port, at least one receive port, at least one antenna port, a filter group, and a switch. The filter group includes a frequency division duplexing FDD transmit filter, an FDD receive filter, a first time division duplexing TDD filter, and a second TDD filter. A fixed end of the switch is connected to the first TDD filter, a first free end of the switch is connected to an output end of the second TDD filter, and a second free end of the switch is connected to one receive port in the at least one receive port; the transmit port is connected to an input end of the FDD transmit filter and an input end of the second TDD filter, an output end of the FDD receive filter is connected to one receive port in the at least one receive port, and an output end of the FDD transmit filter, an input end of the FDD receive filter, and the first TDD filter are each connected to one antenna port in the at least one antenna port.

In this embodiment of this application, a structure of a conventional multiplexer is improved. In this embodiment of this application, the multiplexer is configured with only one transmit port, so that transmit channels of a TDD system and an FDD system can share one transmit port. In addition, in the multiplexer in this embodiment of this application, a switch is further added between a TDD transmit channel and a TDD receive channel. The switch may include one fixed end and two free ends (for example, a first free end and a second free end), and the first free end and the second free end may be respectively located in the TDD transmit channel and the TDD receive channel. The fixed end of the switch is switched between the first free end and the second free end for electrical connection, so that switching between TDD transmission and reception can be implemented. Based on the foregoing multiplexer architecture, when TDD is in a transmit slot, the second free end of the switch is electrically connected to the fixed end. In this case, due to physical isolation between the first free end and the second free end, a series of non-linear spurious signals generated by an FDD transmit signal at the transmit port cannot be leaked into the TDD receive channel, so that impact of FDD transmission on the TDD reception is avoided. In addition, in consideration of a high switching frequency of the switch during actual application, that is, the fixed end is rapidly switched to and from between the first free end and the second free end for electrical connection, an FDD transmit spurious signal may be leaked into the TDD receive channel via the first free end and the second free end. Therefore, in the multiplexer in this embodiment of this application, an additional TDD filter (for example, a second TDD filter) is further provided between the first free end and the transmit port, to suppress a signal outside the TDD frequency band, and avoid a possibility that the FDD transmit signal generated by the transmit port is transmitted into the TDD transmit channel. In this way, in comparison with a solution that is in a conventional technology and in which TDD and FDD cannot share a transmit port, resulting in excessive interfaces, a complex circuit, and a large circuit area, in this embodiment of this application, a multiplexer structure can be improved, so that when reliable operating of both FDD and TDD is ensured, an FDD system and a TDD system share one transmit port, a multiplexing rate of the transmit port is improved, and circuit connection lines and a circuit area are reduced, to further lower production and manufacturing costs, and meet a user requirement.

In a possible implementation, when the first free end of the switch is electrically connected to the fixed end, the second TDD filter is configured to receive a TDD transmit signal output by the transmit port, suppress a signal outside a TDD transmit frequency band, and output the TDD transmit signal to the first TDD filter; and the first TDD filter is configured to suppress a signal outside the TDD transmit frequency band, and output the TDD transmit signal to the antenna port, where a frequency band of the TDD transmit signal is within the TDD transmit frequency band. When the second free end of the switch is electrically connected to the fixed end, the first TDD filter is configured to receive a TDD receive signal input by the antenna port, suppress a signal outside a TDD receive frequency band, and output the TDD receive signal to the receive port, where a frequency band of the TDD receive signal is within the TDD receive frequency band.

In this embodiment of this application, the fixed end of the switch is switched between the first free end and the second free end for electrical connection, so that switching between TDD transmission and reception can be implemented. When the first free end is electrically connected to the fixed end, and the TDD system is in the transmit slot, the second TDD filter may receive the TDD transmit signal output by the transmit port, suppress a signal outside the TDD transmit frequency band, and output the TDD transmit signal to the first TDD filter via the first free end and the fixed end, and the first TDD filter suppresses a signal outside the TDD transmit frequency band, and finally outputs the TDD transmit signal to a corresponding antenna port for transmission. When the second free end of the switch is electrically connected to the fixed end, and the TDD system is in the receive slot, the first TDD filter receives the TDD receive signal input by the antenna port, suppresses a signal outside the TDD receive frequency band, and outputs the TDD receive signal to a corresponding receive port via the fixed end and the second free end. In this way, in this embodiment of this application, a multiplexer architecture can be improved to ensure reliable operating of TDD transmission and reception when an FDD system and a TDD system share one transmit port, so that a user requirement is met.

In a possible implementation, the second TDD filter is specifically configured to suppress a signal on a first frequency band, and output the TDD transmit signal to the first TDD filter. The first TDD filter is specifically configured to suppress a signal on a second frequency band and a third frequency band, and output the TDD transmit signal to the antenna port. The first frequency band, the second frequency band, and the third frequency band are all outside the TDD transmit frequency band.

In this embodiment of this application, both the first TDD filter and the second TDD filter in the multiplexer may suppress a signal outside the TDD transmit frequency band, and frequency bands in which the first TDD filter and the second TDD filter perform suppression may be different. In this way, in this embodiment of this application, a plurality of TDD filters may be configured to respectively suppress a plurality of interference signals outside the TDD transmit frequency band, to ensure a suppression effect for the interference signals, then ensure normal operating of TDD transmission, and reduce implementation difficulty for a single filter.

In a possible implementation, the filter group further includes a third TDD filter, an input end of the third TDD filter is connected to the second free end of the switch, and an output end of the third TDD filter is connected to one receive port of the at least one receive port.

The first TDD filter is specifically configured to suppress a signal on the second frequency band and the third frequency band, and output the TDD receive signal to the third TDD filter. The third TDD filter is configured to suppress a signal on a fourth frequency band, and output the TDD receive signal to the receive port. The second frequency band, the third frequency band, and the fourth frequency band are all outside the TDD receive frequency band.

In this embodiment of this application, in addition to the first TDD filter, an additional TDD filter (for example, a third TDD filter) may be added in the TDD receive channel. An input end of the third TDD filter is connected to the second free end of the switch, and an output end is connected to a corresponding receive port. Both the first TDD filter and the third TDD filter may suppress a signal outside the TDD receive frequency band, and frequency bands in which the first TDD filter and the third TDD filter perform suppression may be different. In this way, in this embodiment of this application, a plurality of TDD filters may be configured to respectively suppress a plurality of interference signals outside the TDD receive frequency band, to ensure a suppression effect for the interference signals, then ensure normal operating of TDD reception, and reduce implementation difficulty for a single filter.

In some possible embodiments, the second TDD filter and the third TDD filter may be band-pass filters or band-stop filters. A band-pass filter is a filter that allows frequency components within a specific range to pass through, but attenuates most other frequency components to extremely low levels. This is opposite to a concept of a band-stop filter. A band-stop filter is a filter that allows most frequency components to pass through, but attenuates frequency components within a specific range to extremely low levels. This is opposite to the concept of a band-pass filter.

In a possible implementation, a quantity of the at least one receive port is one, and the receive port is separately connected to the output end of the FDD receive filter and the second free end of the switch.

The receive port is configured to receive an FDD receive signal output by the FDD receive filter; and when the second free end of the switch is electrically connected to the fixed end, the receive port is further configured to receive a TDD receive signal output by the first TDD filter.

In this embodiment of this application, the multiplexer may include only one receive port, and the receive port may be separately connected to the FDD receive filter and the second free end of the switch. The receive port may be configured to receive the FDD receive signal output by the FDD filter and the TDD receive signal output by the first TDD filter. In this way, in this embodiment of this application, on the basis of implementation of the sharing of the transmit port, the multiplexer structure is further improved, so that when reliable operating of FDD and TDD is ensured, the FDD and the TDD share the receive port, a multiplexing rate of the receive port is improved, and circuit connection lines and a circuit area are further reduced.

In a possible implementation, a quantity of the at least one receive port is one, and the receive port is separately connected to the output end of the FDD receive filter and the output end of the third TDD filter.

The receive port is configured to receive an FDD receive signal output by the FDD receive filter; and when the second free end of the switch is electrically connected to the fixed end, the receive port is further configured to receive the TDD receive signal output by the third TDD filter.

In this embodiment of this application, the multiplexer may include only one receive port, and the receive port may be separately connected to the FDD receive filter and the third TDD filter. The receive port may be configured to receive the FDD receive signal output by the FDD filter and the TDD receive signal output by the third TDD filter. In this way, in this embodiment of this application, on the basis of implementation of the sharing of the transmit port, the multiplexer structure is further improved, so that when reliable operating of FDD and TDD is ensured, the FDD and the TDD share the receive port, a multiplexing rate of the receive port is improved, and circuit connection lines and a circuit area are further reduced.

In a possible implementation, the at least one receive port includes an FDD receive port and a TDD receive port. The FDD receive port is connected to the output end of the FDD receive filter, and the TDD receive port is connected to the second free end of the switch.

The FDD receive port is configured to receive the FDD receive signal output by the FDD receive filter; and when the second free end of the switch is electrically connected to the fixed end, the TDD receive port is configured to receive the TDD receive signal output by the first TDD filter.

In this embodiment of this application, the multiplexer may include two receive ports. One is an FDD receive port connected to the FDD receive filter, and the other is a TDD receive port connected to the second free end. The FDD receive port is configured to receive an FDD receive signal output by the FDD filter, and the TDD receive port is configured to receive a TDD receive signal output by the first TDD filter. In this way, in this embodiment of this application, isolation between TDD transmission and FDD reception may be increased by providing two independent receive ports, to avoid interference from a TDD transmit signal to an FDD receive signal.

In a possible implementation, the at least one receive port includes an FDD receive port and a TDD receive port, the FDD receive port is connected to the output end of the FDD receive filter, and the TDD receive port is connected to the output end of the third TDD filter.

The FDD receive port is configured to receive the FDD receive signal output by the FDD receive filter; and when the second free end of the switch is electrically connected to the fixed end, the TDD receive port is configured to receive the TDD receive signal output by the third TDD filter.

In this embodiment of this application, the multiplexer may include two receive ports. One is an FDD receive port connected to the FDD receive filter, and the other is a TDD receive port connected to the third TDD filter. The FDD receive port is configured to receive an FDD receive signal output by the FDD filter, and the TDD receive port is configured to receive a TDD receive signal output by the third TDD filter. In this way, in this embodiment of this application, isolation between TDD transmission and FDD reception may be increased by providing two independent receive ports, to avoid interference from a TDD transmit signal to an FDD receive signal.

In a possible implementation, a quantity of the at least one antenna port is one, and the antenna port is separately connected to the output end of the FDD transmit filter, the input end of the FDD receive filter, and the first TDD filter.

In this embodiment of this application, the multiplexer may include an antenna port. The antenna port may be separately connected to the FDD transmit filter, the FDD receive filter, and the first TDD filter, to correspondingly transmit an FDD transmit signal and a TDD transmit signal, and receive an FDD receive signal and a TDD receive signal. In this way, in this embodiment of this application, on the basis of implementation of the sharing of the transmit port, FDD and TDD share an antenna port, a multiplexing rate of the antenna port is improved, and circuit connection lines and a circuit area are further reduced.

In a possible implementation, the at least one antenna port includes a first antenna port and a second antenna port. The first antenna port is connected to the output end of the FDD transmit filter and the input end of the FDD receive filter, and the second antenna port is connected to the first TDD filter.

In this embodiment of this application, the multiplexer may include two antenna ports: a first antenna port and a second antenna port. The first antenna port may be connected to the FDD transmit filter and the FDD receive filter, and is configured to transmit the FDD transmit signal and receive the FDD receive signal. The second antenna port is connected to the first TDD filter, and is configured to transmit the TDD transmit signal and receive a TDD receive signal. In this way, in this embodiment of this application, isolation between TDD and FDD may be increased by providing two independent antenna ports, so that normal transmission and reception of the TDD and the FDD are ensured, and at the same time, a suppression degree and implementation difficulty for a filter are further reduced.

In a possible implementation, the at least one antenna port includes a first antenna port and a second antenna port, the first antenna port is connected to the output end of the FDD transmit filter and the first TDD filter, and the second antenna port is connected to the input end of the FDD receive filter.

In this embodiment of this application, the multiplexer may include two antenna ports: a first antenna port and a second antenna port. The first antenna port may be connected to the FDD transmit filter and the first TDD filter, and is configured to transmit the FDD transmit signal and the TDD transmit signal, and receive the TDD receive signal. The second antenna port is connected to the FDD receive filter, and is configured to receive the FDD receive signal. In this way, in this embodiment of this application, isolation between TDD and FDD may be increased by providing two independent antenna ports, so that normal transmission and reception of the TDD and the FDD are ensured, and at the same time, a suppression degree and implementation difficulty for a filter are further reduced.

In a possible implementation, the at least one antenna port includes a first antenna port and a second antenna port, the first antenna port is connected to the output end of the FDD transmit filter, and the second antenna port is connected to the input end of the FDD receive filter and the first TDD filter.

In this embodiment of this application, the multiplexer may include two antenna ports: a first antenna port and a second antenna port. The first antenna port may be connected to the FDD transmit filter, and is configured to transmit the FDD transmit signal. The second antenna port is connected to the FDD receive filter and the first TDD filter, and is configured to receive the FDD receive signal and the TDD receive signal, and transmit the TDD transmit signal. In this way, in this embodiment of this application, isolation between TDD and FDD may be increased by providing two independent antenna ports, so that normal transmission and reception of the TDD and the FDD are ensured, and at the same time, a suppression degree and implementation difficulty for a filter are further reduced.

In a possible implementation, the FDD transmit filter is configured to receive the FDD transmit signal output by the transmit port, suppress a signal outside the FDD transmit frequency band, and output the FDD transmit signal to the antenna port, where a frequency band of the FDD transmit signal is within the FDD transmit frequency band. The FDD receive filter is configured to receive the FDD receive signal input by the antenna port, suppress a signal outside the FDD receive frequency band, and output the FDD receive signal to the receive port, where a frequency band of the FDD receive signal is within the FDD receive frequency band.

In this embodiment of this application, regardless of how a switch in a multiplexer is selectively turned on, an FDD system can always perform normal transmission and reception. In this way, in this embodiment of this application, a multiplexer architecture may be improved, so that when reliable operating of FDD and TDD is ensured, the FDD system and a TDD system share one transmit port, and the FDD system and the TDD system may further share one receive port, or even share one antenna port. This greatly reduces circuit connection lines and a circuit area, lowers production and manufacturing costs, and meets a user requirement.

According to a second aspect, an embodiment of this application provides a communication device. The communication device includes a transmit circuit, a receive circuit, an antenna system, and the multiplexer according to any one of implementations of the first aspect, the transmit circuit is connected to a transmit port of the multiplexer, the receive circuit is connected to at least one receive port of the multiplexer, and the antenna system is connected to at least one antenna port of the multiplexer.

In a possible implementation, the antenna system includes an antenna, a quantity of the at least one antenna port is one, and the antenna is connected to the antenna port.

In a possible implementation, the antenna system includes a first antenna and a second antenna, the at least one antenna port includes a first antenna port and a second antenna port, the first antenna is connected to the first antenna port, and the second antenna is connected to the second antenna port.

It should be understood that the communication device provided in the second aspect of this application is consistent with the technical solution in the first aspect of this application. For specific content and beneficial effects of the communication device, refer to the multiplexer provided in the first aspect. Details are not described herein again. The communication device may be a base station having the foregoing structure and function, or may be a terminal device, for example, a smart wearable device, a smartphone, a tablet computer, or a notebook computer. Alternatively, the communication device may be a part in the base station and the terminal device, for example, a part including a transceiver and an antenna in the base station and the terminal device. This is not specifically limited in this embodiment of this application.

According to a third aspect, an embodiment of this application provides a communication method that is applied to a communication device. The communication device includes a multiplexer, the multiplexer includes a transmit port, at least one receive port, at least one antenna port, a filter group, and a switch. The filter group includes a frequency division duplexing FDD transmit filter, an FDD receive filter, a first time division duplexing TDD filter, and a second TDD filter. A fixed end of the switch is connected to the first TDD filter, a first free end of the switch is connected to an output end of the second TDD filter, and a second free end of the switch is connected to one receive port in the at least one receive port; the transmit port is connected to an input end of the FDD transmit filter and an input end of the second TDD filter, an output end of the FDD receive filter is connected to one receive port in the at least one receive port, and an output end of the FDD transmit filter, an input end of the FDD receive filter, and the first TDD filter are each connected to one antenna port in the at least one antenna port.

The first free end of the switch is controlled to be electrically connected to the fixed end, including:
the second TDD filter receives a TDD transmit signal output by the transmit port, suppresses a signal outside a TDD transmit frequency band, and outputs the TDD transmit signal to the first TDD filter; and
the first TDD filter suppresses a signal outside the TDD transmit frequency band, and outputs the TDD transmit signal to the antenna port, where a frequency band of the TDD transmit signal is within the TDD transmit frequency band.

The second free end of the switch is controlled to be electrically connected to the fixed end, including:
the first TDD filter receives a TDD receive signal input by the antenna port, suppresses a signal outside a TDD receive frequency band, and outputs the TDD receive signal to the receive port, where a frequency band of the TDD receive signal is within the TDD receive frequency band.

It should be understood that a method procedure provided in the third aspect of this application is consistent with the technical solution in the first aspect of this application. For specific content and beneficial effects of the method procedure, refer to the multiplexer provided in the first aspect. Details are not described herein again.

According to a fourth aspect, an embodiment of this application provides a communication device. The communication device may include a processor and a memory. The memory is configured to store program code, and the processor is configured to invoke the program code to implement a function related to the communication method procedure provided in the third aspect. The communication device may further include a communication interface used for communication between the communication device and another device or a communication network.

According to a fifth aspect, an embodiment of this application provides a computer-readable storage medium. The computer-readable storage medium stores a computer program, and when the computer program is executed by a processor, a function related to the communication method procedure provided in the third aspect is implemented.

According to a sixth aspect, an embodiment of this application provides a computer program. The computer program includes instructions, and when the instructions are executed by a computer, the computer is enabled to perform a function related to the communication method procedure provided in the third aspect.

According to a seventh aspect, an embodiment of this application provides a chip. The chip includes a processor and a communication interface. The processor is configured to invoke instructions from the communication interface and run the instructions. When the processor executes the instructions, the chip is enabled to perform a function related to the communication method procedure provided in the third aspect.

According to an eighth aspect, an embodiment of this application provides a chip system. The chip system includes the multiplexer according to any one of the implementations of the first aspect, configured to implement a function related to the communication method procedure provided in the third aspect. In a possible design, the chip system further includes a memory. The memory is configured to store program instructions and data that are essential for a communication method. The chip system may include a chip, or may include a chip and another discrete component.

### BRIEF DESCRIPTION OF DRAWINGS

To describe the technical solutions in embodiments of this application more clearly, the following describes the accompanying drawings used for describing embodiments of this application or the background.
FIG. 1 is an operating diagram of TDD according to an embodiment of this application;
FIG. 2 is an operating diagram of FDD according to an embodiment of this application;
FIG. 3 is a diagram of transmit/receive duplexing in TDD according to an embodiment of this application;
FIG. 4 is a diagram of transmit/receive duplexing in FDD according to an embodiment of this application;
FIG. 5a is a diagram of transmit/receive isolation in FDD according to an embodiment of this application;
FIG. 5b is a diagram of another type of transmit/receive isolation in FDD according to an embodiment of this application;
FIG. 6 is a diagram of a structure of a multiplexer in which TDD and FDD share a transmit port according to an embodiment of this application;
FIG. 7 is a diagram of interference in a TDD receive slot according to an embodiment of this application;
FIG. 8 is a diagram of a structure of a multiplexer in which TDD and FDD do not share an antenna according to an embodiment of this application;
FIG. 9 is a diagram of a structure of a multiplexer in which TDD and FDD share an antenna according to an embodiment of this application;
FIG. 10 is a diagram of a system architecture according to an embodiment of this application;
FIG. 11 is a diagram of a structure of a multiplexer according to an embodiment of this application;
FIG. 12 is a diagram of a structure of another multiplexer according to an embodiment of this application;
FIG. 13 is a diagram of a structure of still another multiplexer according to an embodiment of this application;
FIG. 14 is a diagram of a structure of still another multiplexer according to an embodiment of this application;
FIG. 15 is a diagram of a structure of still another multiplexer according to an embodiment of this application;
FIG. 16a is a diagram of a structure of still another multiplexer according to an embodiment of this application;
FIG. 16b is a diagram of a structure of still another multiplexer according to an embodiment of this application;
FIG. 17a is a diagram of a structure of still another multiplexer according to an embodiment of this application;
FIG. 17b is a diagram of a structure of still another multiplexer according to an embodiment of this application;
FIG. 18a is a diagram of a structure of still another multiplexer according to an embodiment of this application;
FIG. 18b is a diagram of a structure of still another multiplexer according to an embodiment of this application;
FIG. 19a is a diagram of a structure of still another multiplexer according to an embodiment of this application;
FIG. 19b is a diagram of a structure of still another multiplexer according to an embodiment of this application;
FIG. 20a is a diagram of a structure of still another multiplexer according to an embodiment of this application;
FIG. 20b is a diagram of a structure of still another multiplexer according to an embodiment of this application;
FIG. 21a is a diagram of a structure of still another multiplexer according to an embodiment of this application;
FIG. 21b is a diagram of a structure of still another multiplexer according to an embodiment of this application;
FIG. 22 is a diagram of a structure of a communication device according to an embodiment of this application; and
FIG. 23 is a schematic flowchart of a communication method according to an embodiment of this application.

### DESCRIPTION OF EMBODIMENTS

The following describes embodiments of this application with reference to the accompanying drawings in embodiments of this application.

In the specification, claims, and accompanying drawings of this application, terms "first", "second", "third", "fourth", "1st", "2nd", "3rd", "4th", and the like are intended to distinguish between different objects but do not indicate a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

Mentioning an "embodiment" in the specification means that a particular characteristic, structure, or feature described with reference to the embodiment may be included in at least one embodiment of the present invention. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

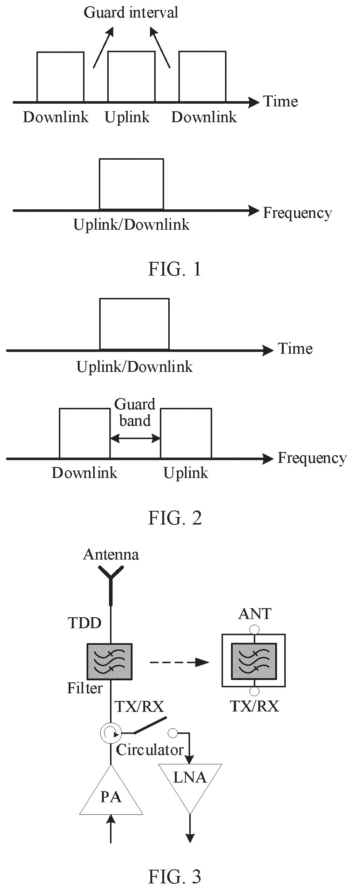

Some terms in this application are first described, to help a person skilled in the art have a better understanding.
(1) Full duplexing, which refers to simultaneous bidirectional communication. Both communication parties can transmit and receive data at a same moment. A full-duplexing technology is further classified into time division duplexing (Time Division Duplexing, TDD) and frequency division duplexing (Frequency Division Duplexing, FDD).
(2) Time division duplexing. By allocating different slots, a TDD system can perform transmit and receive operations by using a single frequency band. FIG. 1 is an operating diagram of TDD according to an embodiment of this application. As shown in FIG. 1, uplink (that is, transmit) and downlink (that is, receive) frequency bands may be the same, but there is a specific slot interval between uplink and downlink. In some TDD systems, equal slots may be allocated to the uplink and the downlink. However, during actual application, uplink and downlink slots may also be asymmetric.
(3) Frequency division duplexing. An FDD system has two independent communication channels, and a sufficient spacing is needed between the two channels to ensure that transmission and reception do not interfere with each other. The FDD system needs to filter or shield a signal, to ensure that a signal transmitter does not affect an adjacent receiver. FIG. 2 is an operating diagram of FDD according to an embodiment of this application. As shown in FIG. 2, an FDD system may simultaneously transmit and receive using the two communication channels. However, frequency bands for transmission and reception are different, and there is specific isolation between the two frequency bands.
(4) Multiplexer. A component that enables a plurality of channels to share one port is referred to as a "multiplexer". A duplexer, a triplexer, a quadruplexer, and the like may be collectively referred to as a "multiplexer". For example, a component that enables two channels to share one port is referred to as a "duplexer" (for example, 1T1R), and a component that enables four channels to share one port is referred to as a quadruplexer (for example, 2T2R).

It should be noted that, a multiplexer usually includes a single input port and a plurality of output ports. However, a multiplexer provided in embodiments of this application refers to combining a plurality of filters to support simultaneous operating in a plurality of frequency bands and in a plurality of standards. An implementation form of the multiplexer may be single-input multiple-output, multiple-input multiple-output, or the like. Further, the multiplexer provided in embodiments of this application includes a group of non-overlapping filters. In terms of combination manner, it is ensured that the filters are not loaded to each other, and outputs are highly isolated from each other. In other words, frequency bands in which a plurality of filters perform suppression are different from each other, and frequency bands of output signals are different from each other.

FIG. 3 is a diagram of transmit/receive duplexing in TDD according to an embodiment of this application. As shown in FIG. 3, in a TDD system, a duplexer may include one filter, one antenna (antenna, ANT) port, and one TX/RX port (TX and RX in TDD share a port). The filter is separately connected to the antenna port and the TX/RX port. As shown in FIG. 3, the TDD system further includes a circulator and a switch. The circulator is separately connected to the TX/RX port, a power amplifier (Power Amplifier, PA) in a TDD transmit channel, and one end of the switch, and the other end of the switch is connected to a low noise amplifier (Low Noise Amplifier, LNA) in a TDD receive channel. The switch is mainly configured to be switched between TX and RX channels for electrical connection to implement time division duplexing. For example, when the switch is turned on, the TDD system is in a receive slot, and a TDD receive signal received by the antenna is filtered by the filter and enters the LNA. For example, when the switch is turned off, the TDD system is in a transmit slot, and a TDD transmit signal output by the PA is filtered by the filter and is sent via the antenna. As described above, a frequency band of the TDD receive signal is the same as a frequency band of the TDD transmit signal. The filter shown in FIG. 3 is configured to suppress a signal outside a TDD transmit/receive frequency band, so as to ensure normal operating of TDD transmission and reception.

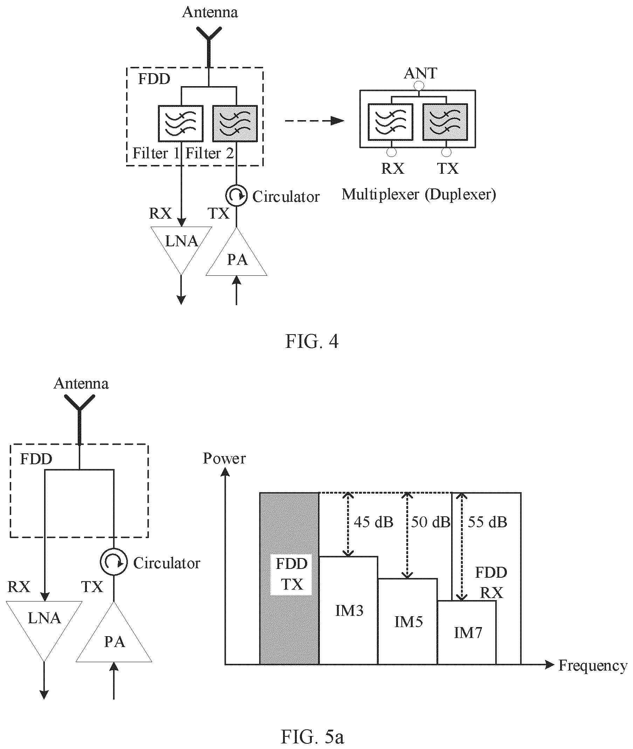

FIG. 4 is a diagram of transmit/receive duplexing in FDD according to an embodiment of this application. In comparison with TDD, a duplexer is usually used in FDD radio application. As shown in FIG. 4, in an FDD system, a duplexer is formed by combining two filters: a filter 1 and a filter 2, and the duplexer further includes one antenna port, one TX port, and one RX port. The filter 1 is a receive filter, and the filter 2 is a transmit filter. An input end of the filter 1 is connected to the antenna port, and an output end of the filter 1 is connected to the RX port. The RX port is configured to be connected to a receiver, for example, an LNA in an FDD receive channel. An output end of the filter 2 is connected to the antenna port, and an input end of the filter 2 is connected to the TX port. The TX port is configured to be connected to a transmitter, for example, a PA in an FDD transmit channel via the circulator. As shown in FIG. 4, the filter 1 and the filter 2 share a common node (that is, the antenna port), and a device is allowed for simultaneous transmission and reception. For example, as shown in FIG. 4, an FDD transmit signal output by the PA is filtered by the filter 2 and sent via an antenna. For example, as shown in FIG. 4, an FDD receive signal received by the antenna is filtered by the filter 1 and enters the LNA. As described above, a frequency band of the FDD receive signal is different from a frequency band of the FDD transmit signal. Therefore, in the FDD system, a design of the duplexer needs to ensure that a passband of each filter does not load another filter. In particular, the transmit filter needs to perform significant suppression in a receive frequency band to ensure that a non-linear spurious emission output by the PA does not interfere with the receive frequency band. Such isolation is often referred to as transmit/receive isolation at a transmit frequency. For example, the filter 1 shown in FIG. 4 needs to suppress a signal outside an FDD receive frequency band (especially, to perform suppression in an FDD transmit frequency band) and output the FDD receive signal, and the filter 2 needs to suppress a signal outside the FDD transmit frequency band (especially, to perform suppression in the FDD receive frequency band) and output the FDD transmit signal, so as to ensure normal operating of FDD transmission and reception.

FIG. 5a is a diagram of transmit/receive isolation in FDD according to an embodiment of this application. As shown in FIG. 5a, when the FDD system does not include the filter 1 and the filter 2, a non-linear spurious emission generated from FDD transmission cannot be well suppressed, and in comparison with the FDD transmit signal, power attenuation of spurious signals IM3, IM5, and IM7 is only 45 dB, 50 dB, and 55 dB respectively. A frequency band of the spurious signal IM7 overlaps with the FDD receive frequency band, affecting the FDD receive signal and interfering with normal operating of FDD reception.

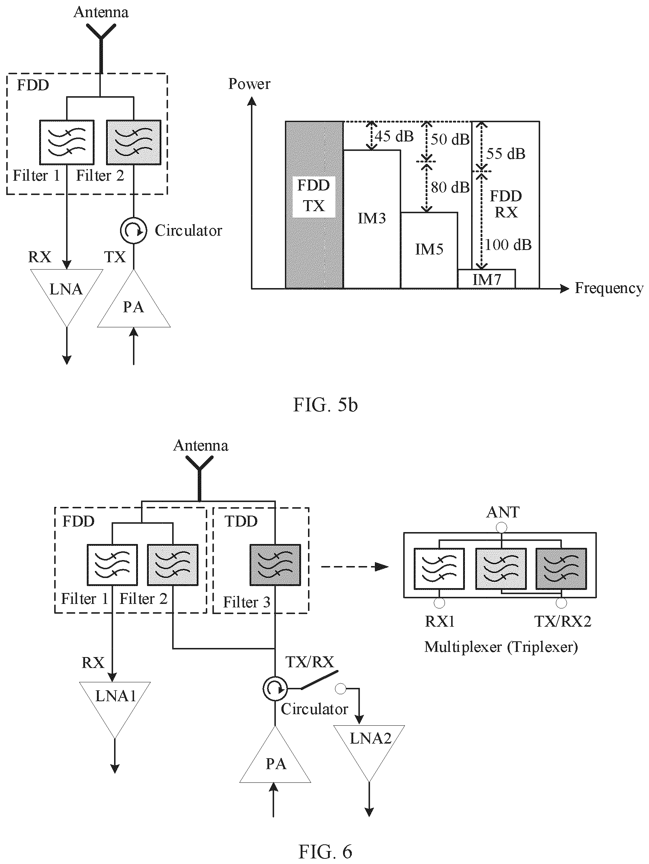

FIG. 5b is a diagram of another type of transmit/receive isolation in FDD according to an embodiment of this application. As shown in FIG. 5b, when the FDD system includes the filter 1 and the filter 2, a non-linear spurious emission generated from FDD transmission can be well suppressed by the filter 1. In comparison with FIG. 5a, the spurious signals IM3, IM5, and IM7 shown in FIG. 5b have further significant attenuation. In comparison with the FDD transmit signal, power attenuation of the spurious signal IM7 is reduced to 155 dB. This almost does not affect the FDD receive signal and ensures normal operating of FDD reception. Generally, a conventional FDD base station needs transmit/receive isolation of at least 150 dBc. In particular, a signal on a transmit frequency band that appears in an output of a receive filter needs to be attenuated significantly, to avoid overdrive at a receive front end.

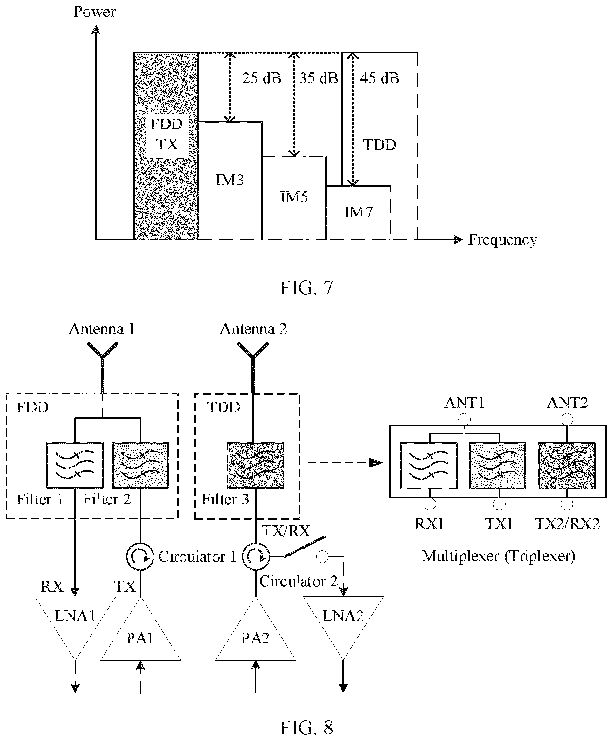

Further, when a device supports both TDD and FDD, a triplexer is often needed. The triplexer includes three filters. A passband loading and isolation target of the triplexer is the same as that of a duplexer. FIG. 6 is a diagram of a structure of a multiplexer in which TDD and FDD share a transmit port according to an embodiment of this application. As shown in FIG. 6, a triplexer includes a filter 1, a filter 2, and a filter 3, and uses one TX port in a conventional FDD solution, that is, the TDD and the FDD share one TX and one PA. In the structure of the multiplexer shown in FIG. 6, if the TDD is in a receive slot (a switch is turned on), an FDD system operates continuously, and the PA cannot be turned off, a non-linear spurious emission output by the PA will be leaked into a TDD receive channel through the turned-on switch. This affects normal operating of TDD reception and does not meet a system application requirement. For example, FIG. 7 is a diagram of interference in a TDD receive slot according to an embodiment of this application. As shown in FIG. 7, non-linear spurious emissions of a PA may be IM3, IM5, and IM7 in the figure. Because there is no filter between the PA and a receive channel, IM3, IM5, and IM7 are not well suppressed. A frequency band of IM7 overlaps with a TDD frequency band, and IM7 does not be attenuated significantly. This causes an increase in a TDD uplink noise floor and affects TDD RX operating.

Therefore, during actual application, because an FDD system and a TDD system easily interfere with each other, and particularly, in the TDD receive slot, an FDD transmit spurious emission may interfere with a TDD receive frequency band, total isolation between FDD TX and TDD RX often needs to meet a specific requirement to be usable. For ease of understanding embodiments of this application, technical problems to be specifically resolved in this application is further analyzed and proposed. In a conventional technology, a multiplexer structure in a TDD+FDD scenario includes a plurality of technical solutions. The following exemplifies two common solutions.

### Solution 1:

FIG. 8 is a diagram of a structure of a multiplexer in which TDD and FDD do not share an antenna according to an embodiment of this application. As shown in FIG. 8, the multiplexer (or referred to as a triplexer) includes a filter 1, a filter 2, and a filter 3, two TX ports (TX1 and TX2), two RX ports (RX1 and RX2), and two antenna ports (ANT1 and ANT2). The ANT1 is connected to the filter 1 and the filter 2 in an FDD system, and the ANT2 is connected to the filter 3 in a TDD system. An output end of the filter 1 is connected to an LNA1 on an FDD receive channel via the RX1 port, an input end of the filter 2 is connected to a PA1 on an FDD transmit channel via the TX1 port and a circulator 1, and the filter 3 is separately connected to a PA2 on a TDD transmit channel and an LNA2 on a TDD receive channel via the TX2/RX2 and a circulator 2. As shown in FIG. 8, in a TDD receive slot (a switch is turned on), the PA2 stops operating and does not generate a spurious emission that affects TDD reception. In addition, because there is sufficient isolation between the PA1 and the TDD receive channel, the TDD reception is not affected either. In this way, in the solution 1, different TX ports are provided for the FDD system and the TDD system, to ensure normal operating in the TDD receive slot.

### Solution 2:

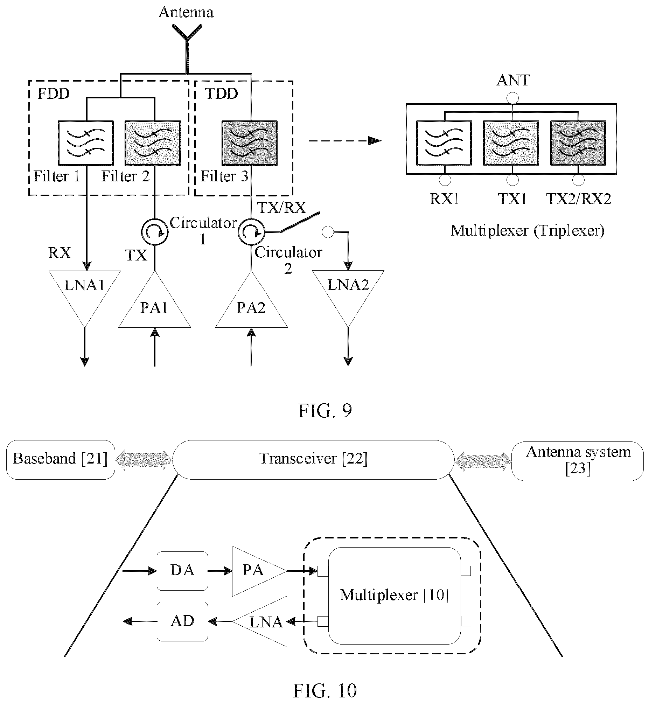

FIG. 9 is a diagram of a structure of a multiplexer in which TDD and FDD share an antenna according to an embodiment of this application. As shown in FIG. 9, the multiplexer 9 includes a filter 1, a filter 2, and a filter 3, two TX ports (TX1 and TX2), two RX ports (RX1 and RX2), and one antenna port. An ANT is connected to the filter 1 and the filter 2 in the FDD and the filter 3 in the TDD. For a specific structure in FIG. 9, refer to the descriptions of the foregoing embodiment corresponding to FIG. 8. Details are not described herein again. As shown in FIG. 9, in a TDD receive slot (a switch is turned on), a PA2 stops operating and does not generate a spurious emission that affects TDD reception. In addition, because there is sufficient isolation between a PA1 and a TDD receive channel, the TDD reception is not affected either. In this way, in the solution 2, different TX ports are provided for an FDD system and a TDD system, to ensure normal operating in the TDD receive slot.

Both the solution 1 and the solution 2 have the following disadvantages:
(1) An FDD system and a TDD system each have one PA input and two different TX ports, and the TX ports cannot be multiplexed. Consequently, there are excessive circuit interfaces, and the systems are complex. In this case, using two independent PAs means that power cannot be shared between the FDD system and the TDD system, resulting in poor flexibility.
(2) The different RX ports are provided for the FDD system and the TDD system, and the RX ports cannot be multiplexed. Consequently, there are excessive circuit interfaces, and the systems are complex.

Therefore, to resolve a problem that a multiplexer structure in a current TDD+FDD scenario does not meet an actual service requirement, a technical problem to be actually resolved in this application includes the following aspects: The multiplexer structure is improved, so that when reliable operating of FDD and TDD is ensured, the FDD and the TDD share one transmit port, and the FDD and the TDD may further share one receive port, to allow a PA and an LNA to be shared, so that circuit interfaces and connection lines are greatly reduced, thereby reducing a circuit area, and lowering production and manufacturing costs.

FIG. 10 is a diagram of a system architecture according to an embodiment of this application. As shown in FIG. 10, the system architecture may include a baseband 21, a transceiver 22, and an antenna system 23 that are sequentially connected. As shown in FIG. 10, the transceiver 22 may include a multiplexer 10. The multiplexer 10 may include only one transmit port. The transmit port is connected to an output end of a PA, and the transmit port is configured to receive an FDD transmit signal and a TDD transmit signal that are output by the PA, so that FDD and TDD share the transmit port. Further, the multiplexer 10 may further include a receive port. The receive port is connected to an input end of an LNA, and the receive port is configured to input an FDD receive signal and a TDD receive signal to the LNA, so that the FDD and the TDD share the receive port. As shown in FIG. 10, in some implementations, an input end of the PA is connected to a digital-analog (digital-analog, DA) conversion module, and an output end of the LNA is connected to an analog-digital (analog-digital, AD) conversion module.

Optionally, the multiplexer 10 may alternatively include a plurality of receive ports. The plurality of receive ends may be respectively connected to a plurality of input ends of the LNA in one-to-one correspondence, to implement full receive isolation between the FDD and the TDD. For details, refer to the following embodiments. Details are not described herein. In addition, as shown in FIG. 10, the multiplexer 10 may alternatively include one or more antenna ports. The one or more antenna ports may be connected to one or more antennas in the antenna system 23 in one-to-one correspondence, to receive the FDD receive signal and the TDD receive signal and send the FDD transmit signal and the TDD transmit signal via corresponding antennas.

It should be noted that the multiplexer 10 provided in this embodiment of this application may be used in the wireless communication field, and may be specifically used in a communication device, such as a base station or a terminal device. The terminal device may be, for example, a smart wearable device, a smartphone, a tablet computer, a notebook computer, an in-vehicle computer, a server, a server cluster including a plurality of servers, or a cloud computing service center. This is not specifically limited in this embodiment of this application. The multiplexer 10 provided in this embodiment of this application is applicable to a communication device that needs to support both TDD and FDD standards. As shown in FIG. 10, the multiplexer 10 may be specifically located at an end of the transceiver 22 in the communication device, and is configured to connect the antenna system 23 to the PA, the LNA, or the like. In this embodiment of this application, a multiplexer structure is improved, so that when reliable operating of the FDD and the TDD is ensured, an FDD system and a TDD system can multiplex one transmit port, thereby simplifying hardware implementation, reducing a circuit area, and lowering power consumption and costs. Further, the FDD system and the TDD system may also multiplex one receive port, thereby greatly reducing circuit interfaces, a circuit area, and the like.

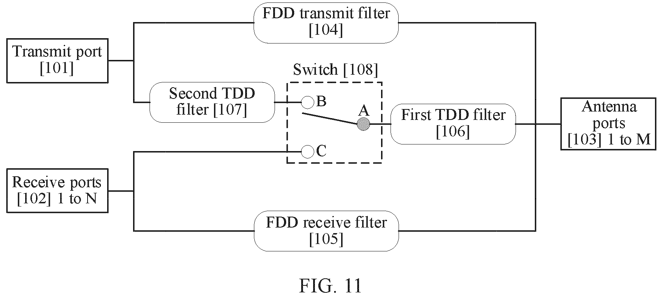

FIG. 11 is a diagram of a structure of a multiplexer according to an embodiment of this application. As shown in FIG. 11, the multiplexer 10 includes one transmit port, at least one receive port, and at least one antenna port, and may specifically include a transmit port 101, N receive ports 102, and M antenna ports 103, and N and M are integers greater than or equal to 1. As shown in FIG. 11, the multiplexer 10 further includes a filter group and a switch 108. The filter group may specifically include an FDD transmit filter 104, an FDD receive filter 105, a first TDD filter 106, and a second TDD filter 107. The switch 108 may include a fixed end (namely, an end A shown in FIG. 11), a first free end (namely, an end B shown in FIG. 11), and a second free end (namely, an end C shown in FIG. 11). For example, the switch 108 may be a single-pole double-throw switch.

As shown in FIG. 11, the end A of the switch 108 is connected to the first TDD filter 106, the end B of the switch 108 is connected to an output end of the second TDD filter 107, and the end C of the switch 108 is connected to one receive port 102 in the N receive ports 102. The transmit port 101 is connected to an input end of the FDD transmit filter 104 and an input end of the second TDD filter 107. An output end of the FDD receive filter 105 is connected to one receive port 102 in the N receive ports 102. An output end of the FDD transmit filter 104, an input end of the FDD receive filter 105, and the first TDD filter 106 are each connected to one antenna port 103 in the M antenna ports 103.

The FDD transmit filter 104 is configured to receive an FDD transmit signal output by the transmit port 101, suppress a signal outside an FDD transmit frequency band, and output the FDD transmit signal to the antenna port 103. A frequency band of the FDD transmit signal is within the FDD transmit frequency band. For example, if the FDD transmit frequency band is of 1 to 2 GHz, the frequency band of the FDD transmit signal is within a frequency band of 1 to 2 GHz. The FDD transmit filter 104 is configured to suppress another signal outside the frequency band of 1 to 2 GHz, and the signal (for example, a signal on 3 to 4 GHz, or a signal on 2 to 3 GHz, like a TDD transmit signal) is significantly attenuated after passing through the FDD transmit filter 104.

The FDD receive filter 105 is configured to receive an FDD receive signal input by the antenna port 103, suppress a signal outside an FDD receive frequency band, and output the FDD receive signal to the receive port 102. A frequency band of the FDD receive signal is within the FDD receive frequency band. For example, if the FDD receive frequency band is of 3 to 4 GHz, the frequency band of the FDD receive signal is within a frequency band of 3 to 4 GHz. The FDD receive filter 105 is configured to suppress another signal outside the frequency band of 3 to 4 GHz, and the signal (for example, a signal on 1 to 2 GHz, or a signal on 2 to 3 GHz, like a TDD transmit signal) is significantly attenuated after passing through the FDD receive filter 105.

When the end A of the switch 108 is electrically connected to the end B:
The second TDD filter 107 is configured to receive a TDD transmit signal output by the transmit port 101, suppress a signal outside a TDD transmit frequency band, and output the TDD transmit signal to the first TDD filter 106.

The first TDD filter 106 is configured to suppress a signal outside the TDD transmit frequency band, and output the TDD transmit signal to the antenna port 103. A frequency band of the TDD transmit signal is within the TDD transmit frequency band. For example, if the TDD transmit frequency band is of 2 to 3 GHz, the frequency band of the TDD transmit signal is within a frequency band of 2 to 3 GHz. The second TDD filter 107 and the first TDD filter 106 suppress another signal outside the frequency band of 2 to 3 GHz, and the signal (for example, a signal on 1 to 1.5 GHz, or a signal on 3 to 4 GHz, like an FDD transmit signal) is significantly attenuated after passing through the second TDD filter 107 and the first TDD filter 106. The second TDD filter is mainly configured to separate the FDD transmit signal and the TDD transmit signal that are output by the transmit port 101, and specifically, to prevent the FDD transmit signal from flowing to a TDD transmit channel by suppressing the FDD transmit signal.

Optionally, the second TDD filter 107 may be configured to suppress a signal outside a first frequency band, and the first TDD filter 106 may be configured to suppress a signal outside a second frequency band and a third frequency band. The first frequency band, the second frequency band, and the third frequency band are all outside the TDD transmit frequency band. For example, if the TDD transmit frequency band is of 2 to 3 GHz, the first frequency band may be of 0 to 1.5 GHz, the second frequency band may be of 1.5 to 2 GHz, and the third frequency band may be of 3 to 3.5 GHz. In this way, in this embodiment of this application, a plurality of TDD filters may be configured to respectively suppress a plurality of interference signals outside the TDD transmit frequency band, to ensure a suppression effect for the interference signals, then ensure normal operating of TDD transmission, and reduce implementation difficulty for a single filter.

When the end A of the switch 108 is electrically connected to the end C:
The first TDD filter 106 is configured to receive a TDD receive signal input by the antenna port 103, suppress a signal outside a TDD receive frequency band, and output the TDD receive signal to the receive port 102. A frequency band of the TDD receive signal is within the TDD receive frequency band. As described above, the TDD transmit frequency band is the same as the TDD receive frequency band. Still using 2 to 3 GHz as an example, a frequency band of the TDD receive signal is within a frequency band of 2 to 3 GHz. The first TDD filter 106 suppresses another signal outside the frequency band of 2 to 3 GHz, and the signal (for example, a signal on 1 to 1.5 GHz, or a signal on 3 to 4 GHz, like an FDD transmit signal) is significantly attenuated after passing through the first TDD filter 106.

Optionally, the switch 108 may be connected to a corresponding control circuit (not shown in the figure). The control circuit is configured to output a control signal. The switch 108 may electrically connect the end A to the end B, or electrically connect the end A to the end C under action of the control signal, to implement switching between TDD transmission and reception.

As described above, isolation between an FDD system and a TDD system is increased by selectively electrically connecting the end A between the end B and the end C of the switch 108. In particular, in a TDD receive slot (that is, when the end A is electrically connected to the end C), based on physical isolation between the end B and the end C, a transmit spurious emission of FDD may be effectively prevented from being leaked into a TDD receive channel, thereby avoiding affecting normal operating of TDD reception. In addition, in consideration of a high switching frequency of the switch 108 during actual application, the FDD transmit signal and a corresponding transmit spurious signal may be leaked, via the end B of the switch 108, into the TDD receive channel in which the end C is located. Therefore, in the multiplexer 10 provided in this embodiment of this application, the second TDD filter 107 is further provided between the transmit port 101 and the end B of the switch. The second TDD filter 107 suppresses the FDD transmit signal, to prevent the FDD transmit signal and the corresponding transmit spurious signal from flowing to the TDD transmit channel and being leaked into the TDD receive channel through the end B and the end C, thereby fully ensuring the normal operating of the TDD reception.

In conclusion, according to the multiplexer 10 provided in this embodiment of this application, when reliable operating of FDD and TDD is ensured, the FDD system and the TDD system share one transmit port, so that a multiplexing rate of the transmit port is improved, and circuit connection lines and a circuit area are reduced, to further lower production and manufacturing costs, and meet a user requirement.

Based on the descriptions of the embodiment corresponding to FIG. 11, the following describes a plurality of possible structures of the multiplexer 10 in detail with reference to the accompanying drawings.

Embodiment 1: A multiplexer 10 includes a single transmit port, dual receive ports, and a single antenna port.

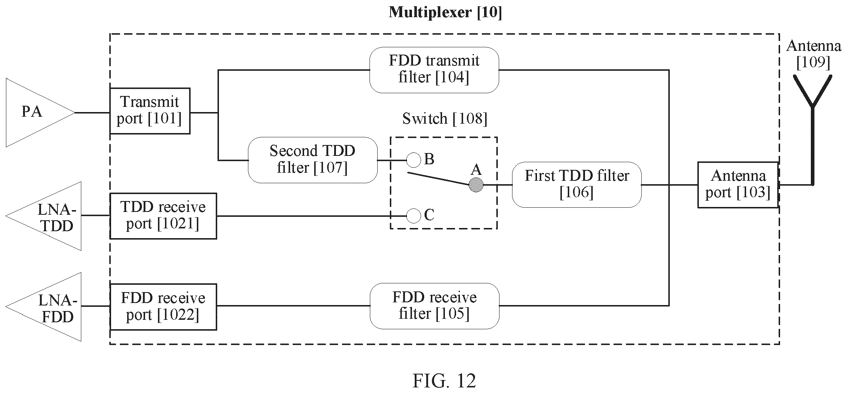

FIG. 12 is a diagram of a structure of another multiplexer according to an embodiment of this application. As shown in FIG. 12, the multiplexer 10 includes one transmit port, two receive ports, and one antenna port, and specifically includes a transmit port 101, a TDD receive port 1021, an FDD receive port 1022, and an antenna port 103. As shown in FIG. 12, the multiplexer 10 further includes a filter group and a switch 108. The filter group may specifically include an FDD transmit filter 104, an FDD receive filter 105, a first TDD filter 106, and a second TDD filter 107. The switch 108 may include an end A, an end B, and an end C. For example, the switch 108 may be a single-pole double-throw switch.

As shown in FIG. 12, the end A of the switch 108 is connected to the first TDD filter 106, the end B of the switch 108 is connected to an output end of the second TDD filter 107, and the end C of the switch 108 is connected to the TDD receive port 1021. The transmit port 101 is connected to an input end of the FDD transmit filter 104 and an input end of the second TDD filter 107. An output end of the FDD receive filter 105 is connected to the FDD receive port 1022. An output end of the FDD transmit filter 104, an input end of the FDD receive filter 105, and the first TDD filter 106 are each connected to the antenna port 103.

Further, as shown in FIG. 12, an input end of the transmit port 101 is connected to an output end of a PA, an output end of the TDD receive port 1021 is connected to an input end of an LNA-TDD (that is, an LNA in a TDD receive channel), an output end of the FDD receive port 1022 is connected to an input end of an LNA-FDD (that is, an LNA in an FDD receive channel), and the antenna port 103 is connected to an antenna 109. An FDD transmit signal and a TDD transmit signal both generated at corresponding power by the PA may be input to the FDD transmit channel and the TDD transmit channel through the transmit port 101.

The FDD transmit filter 104 is configured to receive the FDD transmit signal output by the transmit port 101, suppress a signal outside an FDD transmit frequency band, and output the FDD transmit signal to the antenna port 103.

The antenna port 103 is configured to send the FDD transmit signal via the antenna 109.

The antenna port 103 is further configured to receive an FDD receive signal via the antenna 109.

The FDD receive filter 105 is configured to receive the FDD receive signal input by the antenna port 103, suppress a signal outside an FDD receive frequency band, and output the FDD receive signal to the FDD receive port 1022.

The FDD receive port 1022 is configured to input the FDD receive signal to the LNA-FDD for amplification, to facilitate subsequent processing.

When the end A of the switch 108 is electrically connected to the end B:
The second TDD filter 107 is configured to receive the TDD transmit signal output by the transmit port 101, suppress a signal outside a TDD transmit frequency band, and output the TDD transmit signal to the first TDD filter 106.

The first TDD filter 106 is configured to suppress a signal outside the TDD transmit frequency band, and output the TDD transmit signal to the antenna port 103.

The antenna port 103 is configured to send the TDD transmit signal via the antenna 109.

When the end A of the switch 108 is electrically connected to the end C:
The antenna port 103 is configured to receive a TDD receive signal via the antenna 109.

The first TDD filter 106 is configured to receive the TDD receive signal input by the antenna port 103, suppress a signal outside a TDD receive frequency band, and output the TDD receive signal to the TDD receive port 1021.

The TDD receive port 1021 is configured to input the TDD receive signal to the LNA-TDD for amplification, to facilitate subsequent processing.

Optionally, for specific functions of parts of the multiplexer 10 shown in FIG. 12, refer to the descriptions of the embodiment corresponding to FIG. 11. Details are not described herein again.

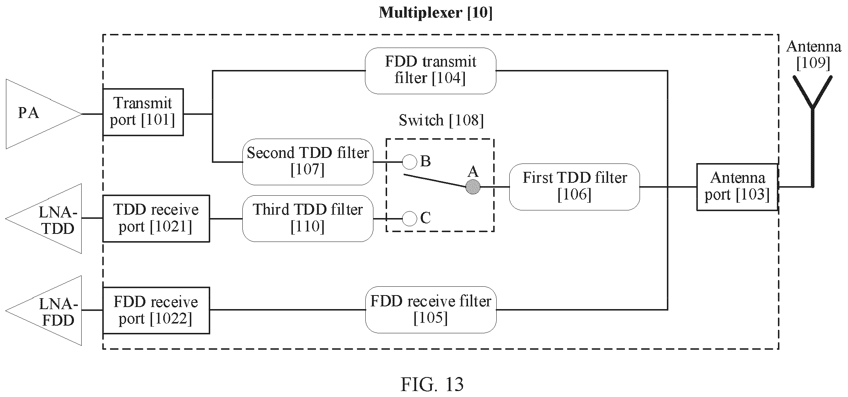

Optionally, FIG. 13 is a diagram of a structure of still another multiplexer according to an embodiment of this application. As shown in FIG. 13, the filter group of the multiplexer 10 may further include a third TDD filter 110. An input end of the third TDD filter 110 is connected to the end C of the switch 108, and an output end of the third TDD filter 110 is connected to the TDD receive port 1021.

When the end A of the switch 108 is electrically connected to the end C:
The first TDD filter 106 is configured to receive the TDD receive signal input by the antenna port 103, suppress a signal outside the TDD receive frequency band, and output the TDD receive signal to the third TDD filter 110.

The third TDD filter 110 is configured to suppress a signal outside the TDD receive frequency band, and output the TDD receive signal to the TDD receive port 1021.

Optionally, the third TDD filter 110 may be configured to suppress a signal outside a fourth frequency band, and the first TDD filter 106 may be configured to suppress a signal outside a second frequency band and a third frequency band. The second frequency band, the third frequency band, and the fourth frequency band are all outside the TDD transmit frequency band. For example, if the TDD transmit frequency band is of 2 to 3 GHz, the fourth frequency band may be of 3.5 to 5 GHz, the second frequency band may be of 1.5 to 2 GHz, and the third frequency band may be of 3 to 3.5 GHz. In this way, in this embodiment of this application, a plurality of TDD filters may be configured to respectively suppress a plurality of interference signals outside the TDD receive frequency band, to ensure a suppression effect for the interference signals, then ensure normal operating of TDD reception, and reduce implementation difficulty for a single filter.

As shown in FIG. 12 and FIG. 13, when an FDD system and a TDD system share one transmit port, the FDD system and the TDD system may share one PA, to implement power sharing between the FDD system and the TDD system. For example, maximum output power of the PA is 200 W. When FDD and TDD are transmitting simultaneously, the PA may allocate 120 W power to the FDD and 90 W power to the TDD, or the PA may allocate 100 W power to the FDD and 100 W power to the TDD, and so on. When the TDD is in a receive slot, only the FDD is transmitting. In this case, the PA may allocate all 200 W power to the FDD system, or allocate 180 W power to the FDD system, to implement flexible power sharing between the FDD system and the TDD system, and reduce a quantity of PAs and costs.

Embodiment 2: A multiplexer 10 includes a single transmit port, a single receive port, and a single antenna port.

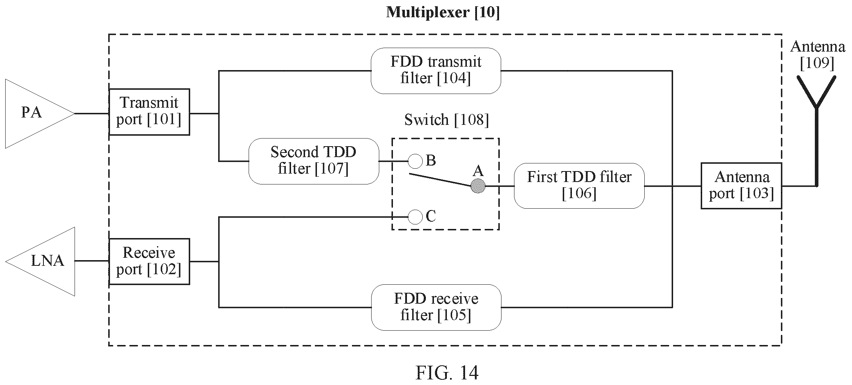

FIG. 14 is a diagram of a structure of still another multiplexer according to an embodiment of this application. As shown in FIG. 14, the multiplexer 10 includes one transmit port, one receive port, and one antenna port, and specifically includes a transmit port 101, a receive port 102, and an antenna port 103. As shown in FIG. 14, the multiplexer 10 further includes a filter group and a switch 108. For details, refer to the descriptions of the embodiment corresponding to FIG. 12. Details are not described herein again.

As shown in FIG. 12, an end A of the switch 108 is connected to a first TDD filter 106, an end B of the switch 108 is connected to an output end of a second TDD filter 107, and an end C of the switch 108 is connected to the receive port 102. The transmit port 101 is connected to an input end of an FDD transmit filter 104 and an input end of the second TDD filter 107. An output end of an FDD receive filter 105 is connected to the receive port 102. An output end of the FDD transmit filter 104, an input end of the FDD receive filter 105, and the first TDD filter 106 are each connected to the antenna port 103.

Further, as shown in FIG. 14, an input end of the transmit port 101 is connected to an output end of a PA, an output end of the receive port 102 is connected to an input end of an LNA, and the antenna port 103 is connected to an antenna 109.

The FDD transmit filter 104 is configured to receive an FDD transmit signal output by the transmit port 101, suppress a signal outside an FDD transmit frequency band, and output the FDD transmit signal to the antenna port 103.

The antenna port 103 is configured to send the FDD transmit signal via the antenna 109.

The antenna port 103 is further configured to receive an FDD receive signal via the antenna 109.

The FDD receive filter 105 is configured to receive the FDD receive signal input by the antenna port 103, suppress a signal outside an FDD receive frequency band, and output the FDD receive signal to the receive port 102.

The receive port 102 is configured to input the FDD receive signal to the LNA for amplification, to facilitate subsequent processing.

When the end A of the switch 108 is electrically connected to the end B:
The second TDD filter 107 is configured to receive a TDD transmit signal output by the transmit port 101, suppress a signal outside a TDD transmit frequency band, and output the TDD transmit signal to the first TDD filter 106.

The first TDD filter 106 is configured to suppress a signal outside the TDD transmit frequency band, and output the TDD transmit signal to the antenna port 103.

The antenna port 103 is configured to send the TDD transmit signal via the antenna 109.

When the end A of the switch 108 is electrically connected to the end C:
The antenna port 103 is configured to receive a TDD receive signal via the antenna 109.

The first TDD filter 106 is configured to receive the TDD receive signal input by the antenna port 103, suppress a signal outside a TDD receive frequency band, and output the TDD receive signal to the receive port 102.

The receive port 102 is configured to input the TDD receive signal to the LNA for amplification, to facilitate subsequent processing.

Optionally, for specific functions of parts of the multiplexer 10 shown in FIG. 14, refer to the descriptions of the embodiment corresponding to FIG. 12. Details are not described herein again.

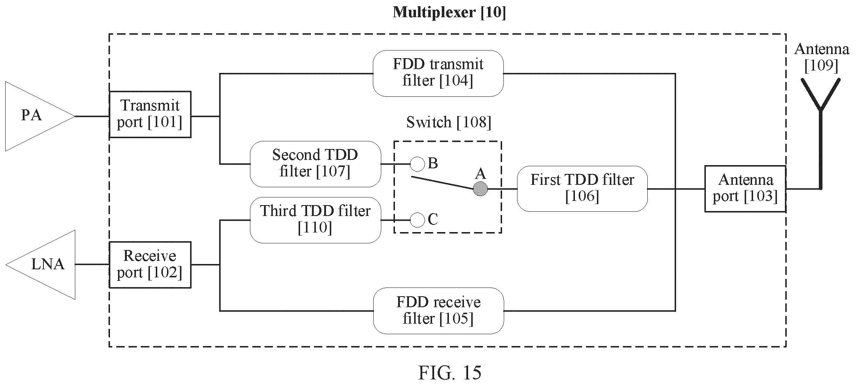

Optionally, FIG. 15 is a diagram of a structure of still another multiplexer according to an embodiment of this application. As shown in FIG. 15, the filter group of the multiplexer 10 may further include a third TDD filter 110. An input end of the third TDD filter 110 is connected to the end C of the switch 108, and an output end of the third TDD filter 110 is connected to the receive port 102.

When the end A of the switch 108 is electrically connected to the end C:
The first TDD filter 106 is configured to receive the TDD receive signal input by the antenna port 103, suppress a signal outside the TDD receive frequency band, and output the TDD receive signal to the third TDD filter 110.

The third TDD filter 110 is configured to suppress a signal outside the TDD receive frequency band, and output the TDD receive signal to the receive port 102.

Optionally, for specific functions of parts of the multiplexer 10 shown in FIG. 15, refer to the descriptions of the embodiment corresponding to FIG. 13. Details are not described herein again.

As shown in FIG. 14 and FIG. 15, when an FDD system and a TDD system share one transmit port, in this embodiment of this application, the TDD system and the FDD system may further share a receive port and an LNA, so that a multiplexing rate of the receive port is improved, and circuit connection lines, a circuit area, and production costs are further reduced.

In addition, as shown in FIG. 14 and FIG. 15, when the FDD system and the TDD system may share one transmit port and one receive port, interface configuration of the multiplexer 10 is the same as that of a conventional FDD multiplexer (as shown in FIG. 4), both including one transmit port and one receive port. In this way, the multiplexer 10 may be independently manufactured into a printed circuit board (printed circuit board, PCB), so that both the FDD system and the TDD system can be used, thereby enhancing a flexible multiplexing capability of the multiplexer.

Embodiment 3: A multiplexer 10 includes a single transmit port, dual receive ports, and dual antenna ports.

(1) TDD and FDD RX sharing an antenna

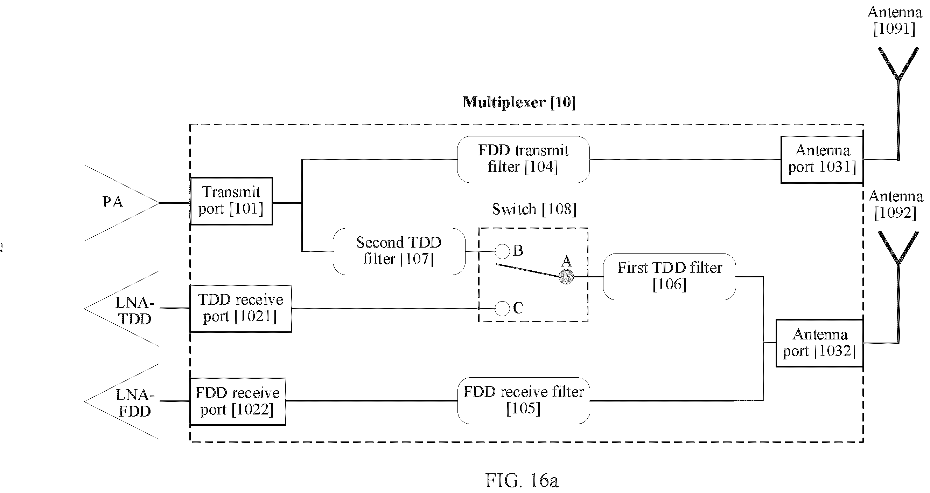

FIG. 16a is a diagram of a structure of still another multiplexer according to an embodiment of this application. As shown in FIG. 16a, the multiplexer 10 includes one transmit port, two receive ports, and two antenna ports, and specifically includes a transmit port 101, a TDD receive port 1021, an FDD receive port 1022, an antenna port 1031, and an antenna port 1032. As shown in FIG. 16a, the multiplexer 10 further includes a filter group and a switch 108. For details, refer to the descriptions of the embodiment corresponding to FIG. 12. Details are not described herein again.

As shown in FIG. 16a, an output end of an FDD transmit filter 104 is connected to the antenna port 1031, and an input end of an FDD receive filter 105 and a first TDD filter 106 are each connected to the antenna port 1032. The antenna port 1031 is connected to an antenna 1091, and the antenna port 1032 is connected to an antenna 1092. For a connection structure of the multiplexer 10 shown in FIG. 16a, refer to the descriptions of the embodiment corresponding to FIG. 12. Details are not described herein again.

The antenna port 1031 is configured to receive an FDD transmit signal output by the FDD transmit filter 104, and send the FDD transmit signal via the antenna 1091.

The antenna port 1032 is configured to receive an FDD receive signal via the antenna 1092, and input the FDD receive signal to the FDD receive filter 105.

When an end A of the switch 108 is electrically connected to an end B:
The antenna port 1032 is configured to receive a TDD transmit signal output by the first TDD filter 106, and send the TDD transmit signal via the antenna 1092.

When the end A of the switch 108 is electrically connected to an end C:
The antenna port 1032 is configured to receive a TDD receive signal via the antenna 1092, and input the TDD receive signal to the first TDD filter 106.

Optionally, for specific functions of parts of the multiplexer 10 shown in FIG. 16a, refer to the descriptions of the embodiment corresponding to FIG. 12. Details are not described herein again.

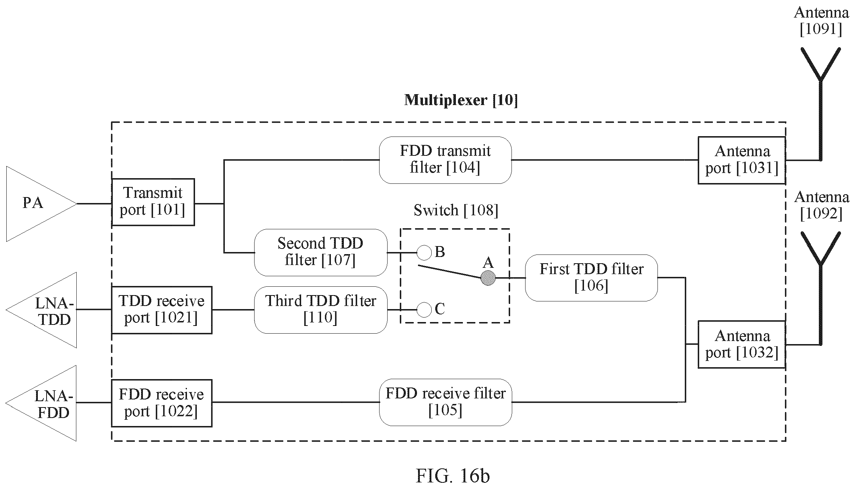

FIG. 16b is a diagram of a structure of still another multiplexer according to an embodiment of this application. As shown in FIG. 16b, the filter group of the multiplexer 10 may further include a third TDD filter 110. An input end of the third TDD filter 110 is connected to the end C of the switch 108, and an output end of the third TDD filter 110 is connected to the TDD receive port 1021. For a specific function of the third TDD filter 110, refer to the descriptions of the embodiment corresponding to FIG. 13. Details are not described herein again.

### (2) TDD and FDD TX sharing an antenna

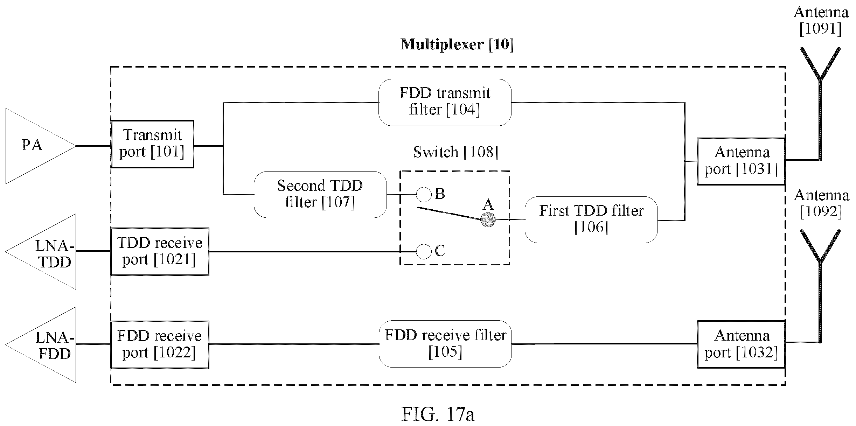

FIG. 17a is a diagram of a structure of still another multiplexer according to an embodiment of this application. As shown in FIG. 17a, the multiplexer 10 includes one transmit port, two receive ports, and two antenna ports, and specifically includes a transmit port 101, a TDD receive port 1021, an FDD receive port 1022, an antenna port 1031, and an antenna port 1032. As shown in FIG. 17a, the multiplexer 10 further includes a filter group and a switch 108. For details, refer to the descriptions of the embodiment corresponding to FIG. 12. Details are not described herein again.

As shown in FIG. 17a, an output end of an FDD transmit filter 104 and a first TDD filter 106 are each connected to the antenna port 1031, and an input end of an FDD receive filter 105 is connected to the antenna port 1032. The antenna port 1031 is connected to an antenna 1091, and the antenna port 1032 is connected to an antenna 1092. For a connection structure of the multiplexer 10 shown in FIG. 17a, refer to the descriptions of the embodiment corresponding to FIG. 12. Details are not described herein again.

The antenna port 1031 is configured to receive an FDD transmit signal output by the FDD transmit filter 104, and send the FDD transmit signal via the antenna 1091.

The antenna port 1032 is configured to receive an FDD receive signal via the antenna 1092, and input the FDD receive signal to the FDD receive filter 105.

When an end A of the switch 108 is electrically connected to an end B:
The antenna port 1031 is configured to receive a TDD transmit signal output by the first TDD filter 106, and send the TDD transmit signal via the antenna 1091.

When the end A of the switch 108 is electrically connected to an end C:
The antenna port 1031 is configured to receive a TDD receive signal via the antenna 1091, and input the TDD receive signal to the first TDD filter 106.

Optionally, for specific functions of parts of the multiplexer 10 shown in FIG. 17a, refer to the descriptions of the embodiment corresponding to FIG. 12. Details are not described herein again.

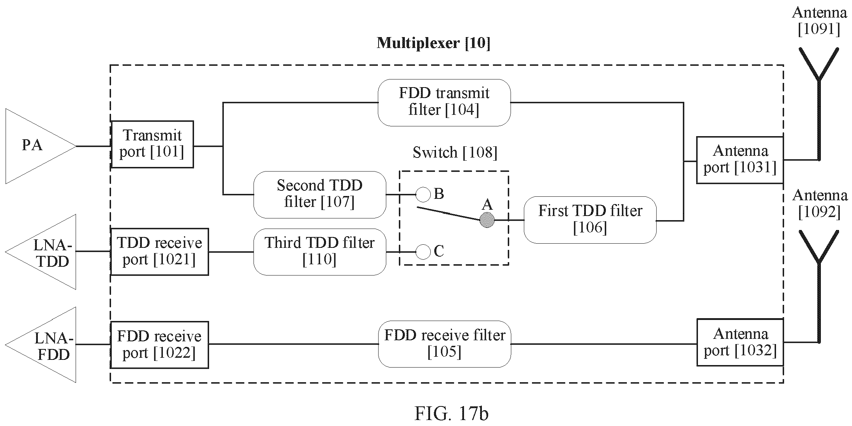

FIG. 17b is a diagram of a structure of still another multiplexer according to an embodiment of this application. As shown in FIG. 17b, the filter group of the multiplexer 10 may further include a third TDD filter 110. An input end of the third TDD filter 110 is connected to the end C of the switch 108, and an output end of the third TDD filter 110 is connected to the TDD receive port 1021. For a specific function of the third TDD filter 110, refer to the descriptions of the embodiment corresponding to FIG. 13. Details are not described herein again.

### (3) FDD TX and FDD RX sharing an antenna

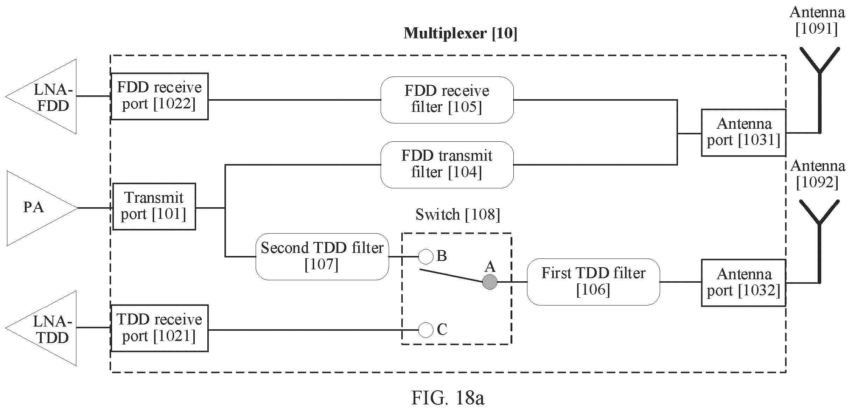

FIG. 18a is a diagram of a structure of still another multiplexer according to an embodiment of this application. As shown in FIG. 18a, the multiplexer 10 includes one transmit port, two receive ports, and two antenna ports, and specifically includes a transmit port 101, a TDD receive port 1021, an FDD receive port 1022, an antenna port 1031, and an antenna port 1032. As shown in FIG. 18a, the multiplexer 10 further includes a filter group and a switch 108. For details, refer to the descriptions of the embodiment corresponding to FIG. 12. Details are not described herein again.

As shown in FIG. 18a, an output end of an FDD transmit filter 104 and an input end of an FDD receive filter 105 are each connected to the antenna port 1031, and a first TDD filter 106 is connected to the antenna port 1032. The antenna port 1031 is connected to an antenna 1091, and the antenna port 1032 is connected to an antenna 1092. For a connection structure of the multiplexer 10 shown in FIG. 18a, refer to the descriptions of the embodiment corresponding to FIG. 12. Details are not described herein again.

The antenna port 1031 is configured to receive an FDD transmit signal output by the FDD transmit filter 104, and send the FDD transmit signal via the antenna 1091.

The antenna port 1031 is further configured to receive an FDD receive signal via the antenna 1091, and input the FDD receive signal to the FDD receive filter 105.

When an end A of the switch 108 is electrically connected to an end B:
The antenna port 1032 is configured to receive a TDD transmit signal output by the first TDD filter 106, and send the TDD transmit signal via the antenna 1092.

When the end A of the switch 108 is electrically connected to an end C:
The antenna port 1032 is configured to receive a TDD receive signal via the antenna 1092, and input the TDD receive signal to the first TDD filter 106.

Optionally, for specific functions of parts of the multiplexer 10 shown in FIG. 18a, refer to the descriptions of the embodiment corresponding to FIG. 12. Details are not described herein again.

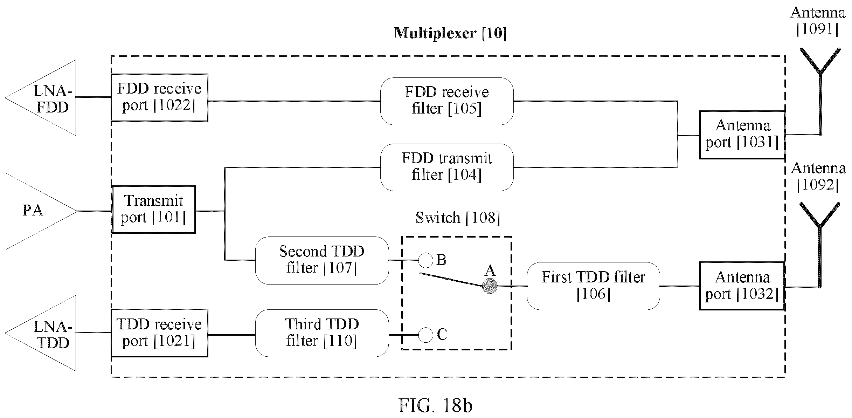

FIG. 18b is a diagram of a structure of still another multiplexer according to an embodiment of this application. As shown in FIG. 18b, the filter group of the multiplexer 10 may further include a third TDD filter 110. An input end of the third TDD filter 110 is connected to the end C of the switch 108, and an output end of the third TDD filter 110 is connected to a TDD receive port 1021. For a specific function of the third TDD filter 110, refer to the descriptions of the embodiment corresponding to FIG. 13. Details are not described herein again.

Embodiment 4: A multiplexer 10 includes a single transmit port, a single receive port, and dual antenna ports.

### (1) TDD and FDD RX sharing an antenna

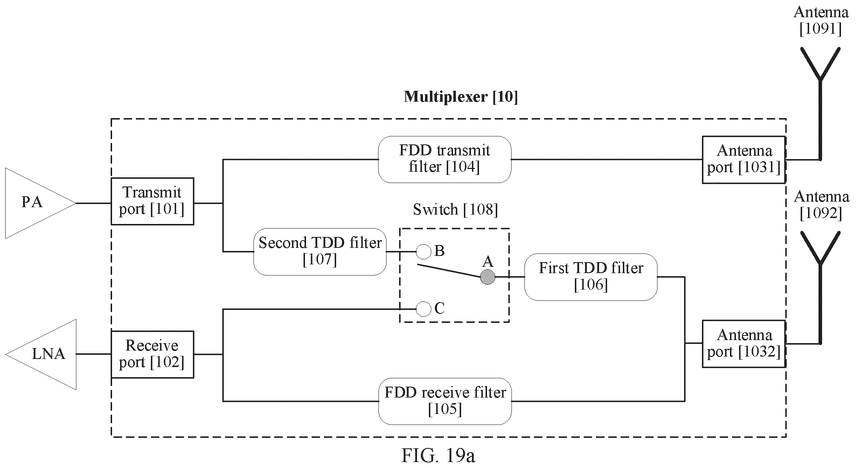

FIG. 19a is a diagram of a structure of still another multiplexer according to an embodiment of this application. As shown in FIG. 19a, the multiplexer 10 includes one transmit port, one receive port, and two antenna ports, and specifically includes a transmit port 101, a receive port 102, an antenna port 1031, and an antenna port 1032. As shown in FIG. 19a, the multiplexer 10 further includes a filter group and a switch 108. For details, refer to the descriptions of the embodiment corresponding to FIG. 14. Details are not described herein again.

As shown in FIG. 19a, an output end of an FDD transmit filter 104 is connected to the antenna port 1031, and an input end of a first TDD filter 106 and an input end of an FDD receive filter 105 are each connected to the antenna port 1032. The antenna port 1031 is connected to an antenna 1091, and the antenna port 1032 is connected to an antenna 1092. For a connection structure of the multiplexer 10 shown in FIG. 19a, refer to the descriptions of the embodiment corresponding to FIG. 14. Details are not described herein again.

The antenna port 1031 is configured to receive an FDD transmit signal output by the FDD transmit filter 104, and send the FDD transmit signal via the antenna 1091.

The antenna port 1032 is configured to receive an FDD receive signal via the antenna 1092, and input the FDD receive signal to the FDD receive filter 105.

When an end A of the switch 108 is electrically connected to an end B:
The antenna port 1032 is configured to receive a TDD transmit signal output by the first TDD filter 106, and send the TDD transmit signal via the antenna 1092.

When the end A of the switch 108 is electrically connected to an end C:
The antenna port 1032 is configured to receive a TDD receive signal via the antenna 1092, and input the TDD receive signal to the first TDD filter 106.

Optionally, for specific functions of parts of the multiplexer 10 shown in FIG. 19a, refer to the descriptions of the embodiment corresponding to FIG. 14. Details are not described herein again.

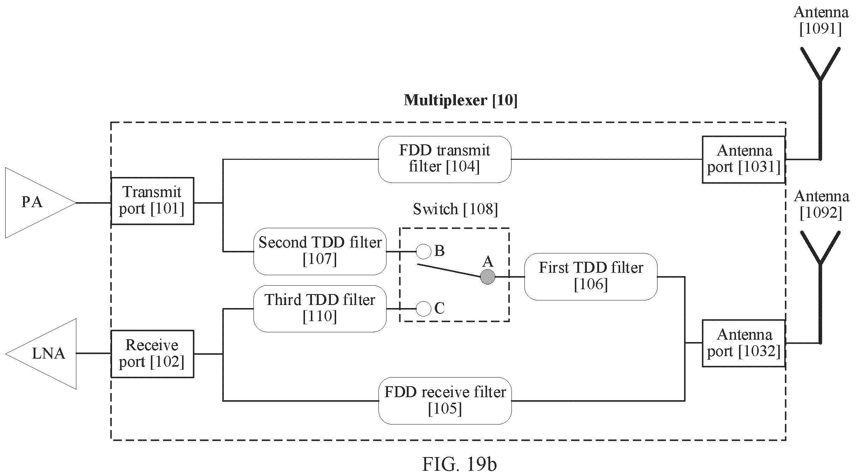

FIG. 19b is a diagram of a structure of still another multiplexer according to an embodiment of this application. As shown in FIG. 19b, the filter group of the multiplexer 10 may further include a third TDD filter 110. An input end of the third TDD filter 110 is connected to the end C of the switch 108, and an output end of the third TDD filter 110 is connected to the receive port 102. For a specific function of the third TDD filter 110, refer to the descriptions of the embodiment corresponding to FIG. 15. Details are not described herein again.

### (2) TDD and FDD TX sharing an antenna

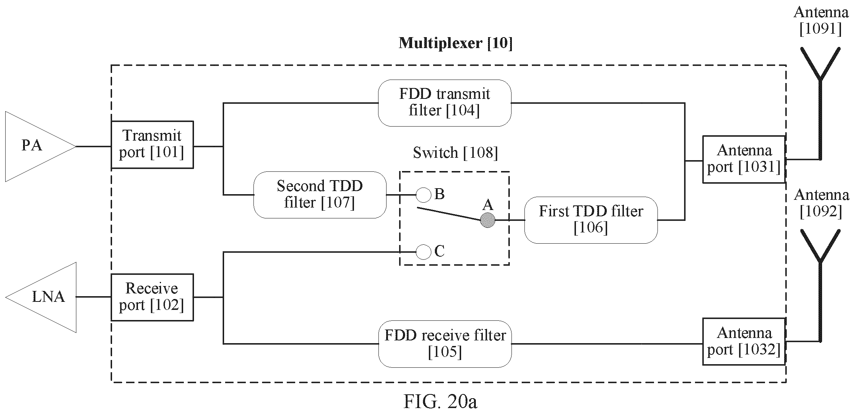

FIG. 20a is a diagram of a structure of still another multiplexer according to an embodiment of this application. As shown in FIG. 20a, the multiplexer 10 includes one transmit port, one receive port, and two antenna ports, and specifically includes a transmit port 101, a receive port 102, an antenna port 1031, and an antenna port 1032. As shown in FIG. 20a, the multiplexer 10 further includes a filter group and a switch 108. For details, refer to the descriptions of the embodiment corresponding to FIG. 14. Details are not described herein again.

The antenna port 1031 is configured to receive an FDD transmit signal output by an FDD transmit filter 104, and send the FDD transmit signal via an antenna 1091.

The antenna port 1032 is configured to receive an FDD receive signal via an antenna 1092, and input the FDD receive signal to an FDD receive filter 105.

When an end A of the switch 108 is electrically connected to an end B:
The antenna port 1031 is configured to receive a TDD transmit signal output by a first TDD filter 106, and send the TDD transmit signal via the antenna 1091.

When the end A of the switch 108 is electrically connected to an end C:
The antenna port 1031 is configured to receive a TDD receive signal via the antenna 1091, and input the TDD receive signal to the first TDD filter 106.

Optionally, for specific functions of parts of the multiplexer 10 shown in FIG. 20a, refer to the descriptions of the embodiment corresponding to FIG. 14. Details are not described herein again.

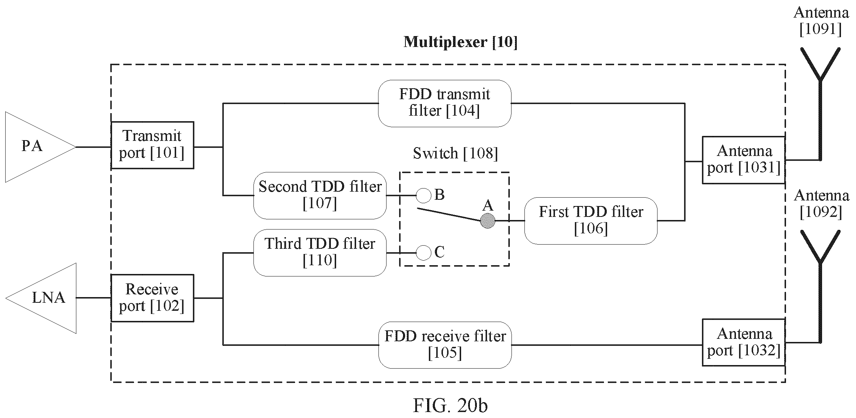

FIG. 20b is a diagram of a structure of still another multiplexer according to an embodiment of this application. As shown in FIG. 20b, the filter group of the multiplexer 10 may further include a third TDD filter 110. An input end of the third TDD filter 110 is connected to the end C of the switch 108, and an output end of the third TDD filter 110 is connected to the receive port 102. For a specific function of the third TDD filter 110, refer to the descriptions of the embodiment corresponding to FIG. 15. Details are not described herein again.

### (3) FDD TX and FDD RX sharing an antenna

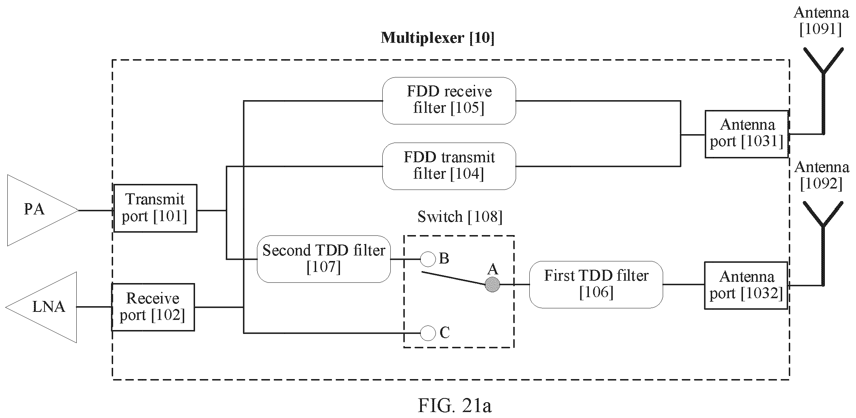

FIG. 21a is a diagram of a structure of still another multiplexer according to an embodiment of this application. As shown in FIG. 21a, the multiplexer 10 includes one transmit port, one receive port, and two antenna ports, and specifically includes a transmit port 101, a receive port 102, an antenna port 1031, and an antenna port 1032. As shown in FIG. 21a, the multiplexer 10 further includes a filter group and a switch 108. For details, refer to the descriptions of the embodiment corresponding to FIG. 14. Details are not described herein again.

As shown in FIG. 21a, an output end of an FDD transmit filter 104 and an input end of an FDD receive filter 105 are each connected to the antenna port 1031, and a first TDD filter 106 is connected to the antenna port 1032. The antenna port 1031 is connected to an antenna 1091, and the antenna port 1032 is connected to an antenna 1092. For a connection structure of the multiplexer 10 shown in FIG. 21a, refer to the descriptions of the embodiment corresponding to FIG. 14. Details are not described herein again.

The antenna port 1031 is configured to receive an FDD transmit signal output by the FDD transmit filter 104, and send the FDD transmit signal via the antenna 1091.

The antenna port 1031 is further configured to receive an FDD receive signal via the antenna 1091, and input the FDD receive signal to the FDD receive filter 105.

When an end A of the switch 108 is electrically connected to an end B:
The antenna port 1032 is configured to receive a TDD transmit signal output by the first TDD filter 106, and send the TDD transmit signal via the antenna 1092.

When the end A of the switch 108 is electrically connected to an end C:
The antenna port 1032 is configured to receive a TDD receive signal via the antenna 1092, and input the TDD receive signal to the first TDD filter 106.

Optionally, for specific functions of parts of the multiplexer 10 shown in FIG. 21a, refer to the descriptions of the embodiment corresponding to FIG. 14. Details are not described herein again.

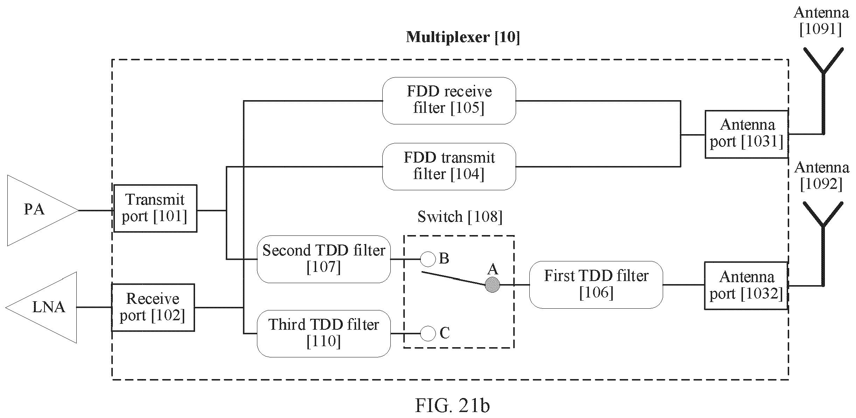

FIG. 21b is a diagram of a structure of still another multiplexer according to an embodiment of this application. As shown in FIG. 19b, the filter group of the multiplexer 10 may further include a third TDD filter 110. An input end of the third TDD filter 110 is connected to the end C of the switch 108, and an output end of the third TDD filter 110 is connected to the receive port 102. For a specific function of the third TDD filter 110, refer to the descriptions of the embodiment corresponding to FIG. 15. Details are not described herein again.

As shown in FIG. 16a to FIG. 21b, the multiplexer 10 in embodiments of this application may be configured with two antenna ports to achieve air interface isolation of a plurality of frequency bands, so that a suppression degree of the filter can be reduced, and implementation difficulty for a filter is reduced.

In conclusion, in embodiments of this application, a structure of a conventional multiplexer in an FDD+TDD scenario is innovated. A switch and a TDD filter are provided between the switch and a transmit port, so that isolation between TDD reception and FDD transmission is increased, and impact of an FDD transmit spurious emission on a TDD receive signal in a TDD receive slot is avoided. In this way, FDD and TDD can share one transmit port, reducing circuit connections and a circuit area. In addition, in embodiments of this application, the switch is provided to separate one original TDD filter (for example, the filter 3 shown in FIG. 8) into three filters (a first TDD filter, a second TDD filter, and a third TDD filter). The first TDD filter mainly supports multiplexing and combining with an FDD system and performs remote spurious suppression, and the second TDD filter and the third TDD filter that are matched with the first TDD filter perform transmit spurious suppression and receive blocking suppression respectively, so that overall loss is reduced. This is more conducive for the FDD and the TDD to share one receive port. In comparison with a conventional solution in which a single filter is configured to perform both transmit spurious suppression and receive blocking suppression, resulting in higher implementation difficulty for the filter, higher order, and greater loss, in this embodiment of this application, implementation difficulty for a single filter can be reduced, and a suppression effect is ensured.

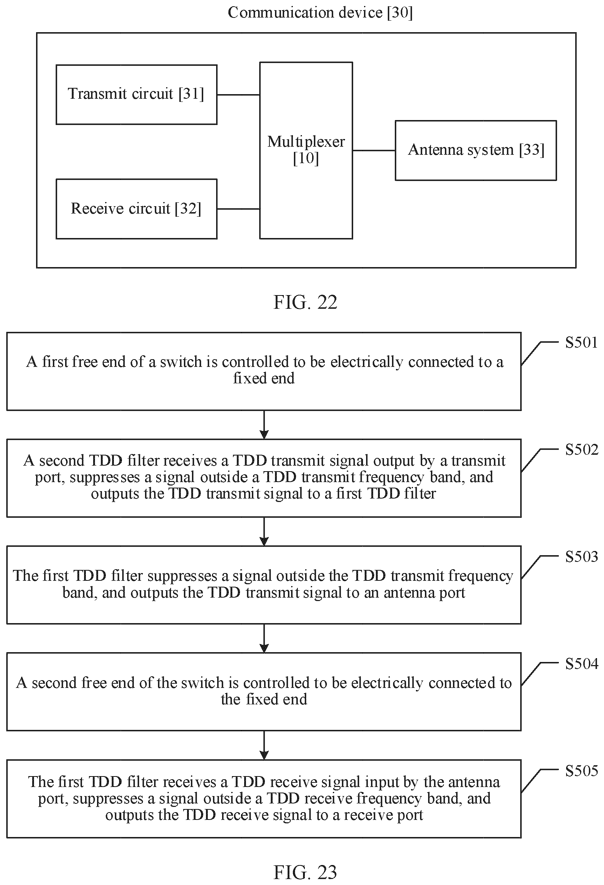

Based on the multiplexer 10 described in the foregoing embodiments, an embodiment of this application further provides a communication device. FIG. 22 is a diagram of a structure of a communication device according to an embodiment of this application. As shown in FIG. 22, the communication device 30 includes a transmit circuit 31, a receive circuit 32, an antenna system 33, and a multiplexer 10. The transmit circuit 31 may be connected to a transmit port 101 of the multiplexer 10, the receive circuit 32 may be connected to at least one receive port (for example, N receive ports 102) in the multiplexer 10, and the antenna system 33 may be connected to at least one antenna port (for example, M antenna ports 103) in the multiplexer 10. Optionally, the transmit circuit 31 may include the foregoing PA, and the receive circuit 32 may include the foregoing LNA, and so on.

Optionally, the antenna system 33 includes one antenna, for example, the antenna 109 shown in FIG. 12. The multiplexer 10 includes one antenna port, for example, the antenna port 103. The antenna 109 is connected to the antenna port 103.

Optionally, the antenna system 33 includes two antennas, a first antenna and a second antenna, for example, the antenna 1091 and the antenna 1092 shown in FIG. 16a. The multiplexer 10 includes two antenna ports, for example, an antenna port 1031 and an antenna port 1032. The antenna 1091 is connected to the antenna port 1031, and the antenna 1092 is connected to the antenna port 1032.

Optionally, the communication device 30 further includes a control circuit. The control circuit is connected to the multiplexer 10, may be specifically connected to a switch 108 in the multiplexer 10, and is configured to output a control signal to selectively control electrical connection of the switch 108.

Optionally, for a structure and a function of the communication device 30, refer to the descriptions of the embodiments corresponding to FIG. 10 to FIG. 21b. Details are not described herein again. The communication device 30 may be a base station having the foregoing structure and function, or may be a terminal device, for example, a smart wearable device, a smartphone, a tablet computer, or a notebook computer. Alternatively, the communication device may be a part in the base station and the terminal device, for example, a part including a transceiver and an antenna in the base station and the terminal device. This is not specifically limited in this embodiment of this application.

Based on the descriptions of the foregoing apparatus embodiments, an embodiment of this application further provides a communication method. FIG. 23 is a schematic flowchart of a communication method according to an embodiment of this application. The communication method may be applied to the communication device 30 shown in FIG. 22. The communication device 30 includes at least a multiplexer 10. The multiplexer 10 may include a transmit port, at least one receive port, at least one antenna port, a filter group, a switch, and the like. For details, refer to the descriptions of the embodiments corresponding to FIG. 11 to FIG. 21b. The method may include the following steps S501 to S505.

S501: A first free end of a switch is controlled to be electrically connected to a fixed end.

S502: A second TDD filter receives a TDD transmit signal output by the transmit port, suppresses a signal outside a TDD transmit frequency band, and outputs the TDD transmit signal to a first TDD filter.

S503: The first TDD filter suppresses a signal outside the TDD transmit frequency band, and outputs the TDD transmit signal to the antenna port.

A frequency band of the TDD transmit signal is within the TDD transmit frequency band.

S504: A second free end of the switch is controlled to be electrically connected to the fixed end.

S505: The first TDD filter receives a TDD receive signal input by the antenna port, suppresses a signal outside a TDD receive frequency band, and outputs the TDD receive signal to the receive port.

A frequency band of the TDD receive signal is within the TDD receive frequency band.

In this way, according to the communication method provided in this embodiment of this application, reliable switching between TDD transmission and TDD reception can be implemented by controlling the fixed end of the switch to be selectively electrically connected between the two free ends. In addition, based on physical isolation between the two free ends of the switch, signal leakage can be effectively prevented between a TDD transmit channel and a TDD receive channel. In particular, when FDD and TDD share a transmit port, an FDD transmit signal and a series of non-linear spurious signals generated by the FDD transmit signal can be effectively prevented from being leaked into the TDD receive channel. In this way, in comparison with a solution that is in a conventional technology and in which TDD and FDD cannot share a transmit port, resulting in excessive interfaces, a complex circuit, and a large circuit area, in this embodiment of this application, when reliable operating of the FDD and the TDD is ensured, an FDD system and a TDD system can share one transmit port, so that a multiplexing rate of the transmit port is improved, circuit connection lines and a circuit area are reduced, to further lower production and manufacturing costs, and meet a user requirement.

Optionally, for details of the communication method, refer to the descriptions of the embodiments corresponding to FIG. 11 to FIG. 21b. Details are not described herein again. The communication method may be specifically implemented based on hardware, or a combination of software and hardware. A hardware implementation may include a logic circuit, an algorithm circuit, an analog circuit, or the like. A software implementation may include program instructions. The program instructions may be considered as a software product, and stored in a memory, and may be run by a processor to implement a related function.

An embodiment of this application further provides a computer-readable storage medium. The computer-readable storage medium may store a program. When the program is executed by a processor, the processor is enabled to perform some or all steps recorded in any one of the foregoing method embodiments. The storage medium may include: any medium that can store program code, such as a USB flash drive, a removable hard disk, a magnetic disk, an optical disc, a read-only memory (Read-Only Memory, ROM for short), or a random access memory (Random Access Memory, RAM for short).

An embodiment of this application further provides a computer program. The computer program includes instructions. When the computer program is executed by a multi-core processor, the processor is enabled to perform some or all steps recorded in any one of the foregoing method embodiments.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

The foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A multiplexer, wherein the multiplexer comprises a transmit port, at least one receive port, at least one antenna port, a filter group, and a switch, and the filter group comprises a frequency division duplexing FDD transmit filter, an FDD receive filter, a first time division duplexing TDD filter, and a second TDD filter, wherein
a fixed end of the switch is connected to the first TDD filter, a first free end of the switch is connected to an output end of the second TDD filter, and a second free end of the switch is connected to one receive port in the at least one receive port; the transmit port is connected to an input end of the FDD transmit filter and an input end of the second TDD filter, an output end of the FDD receive filter is connected to one receive port in the at least one receive port, and an output end of the FDD transmit filter, an input end of the FDD receive filter, and the first TDD filter are each connected to one antenna port in the at least one antenna port.

2. The multiplexer according to claim 1, wherein
when the first free end of the switch is electrically connected to the fixed end,
the second TDD filter is configured to receive a TDD transmit signal output by the transmit port, suppress a signal outside a TDD transmit frequency band, and output the TDD transmit signal to the first TDD filter; and
the first TDD filter is configured to suppress a signal outside the TDD transmit frequency band, and output the TDD transmit signal to the antenna port, wherein a frequency band of the TDD transmit signal is within the TDD transmit frequency band; or
when the second free end of the switch is electrically connected to the fixed end,
the first TDD filter is configured to receive a TDD receive signal input by the antenna port, suppress a signal outside a TDD receive frequency band, and output the TDD receive signal to the receive port, wherein a frequency band of the TDD receive signal is within the TDD receive frequency band.

3. The multiplexer according to claim 2, wherein
the second TDD filter is specifically configured to suppress a signal on a first frequency band, and output the TDD transmit signal to the first TDD filter; and
the first TDD filter is specifically configured to suppress a signal on a second frequency band and a third frequency band, and output the TDD transmit signal to the antenna port, wherein the first frequency band, the second frequency band, and the third frequency band are all outside the TDD transmit frequency band.

4. The multiplexer according to claim 3, wherein the filter group further comprises a third TDD filter, an input end of the third TDD filter is connected to the second free end of the switch, and an output end of the third TDD filter is connected to one receive port in the at least one receive port.

5. The multiplexer according to claim 4, wherein
the first TDD filter is specifically configured to suppress a signal on the second frequency band and the third frequency band, and output the TDD receive signal to the third TDD filter; and
the third TDD filter is configured to suppress a signal on a fourth frequency band, and output the TDD receive signal to the receive port, wherein the second frequency band, the third frequency band, and the fourth frequency band are all outside the TDD receive frequency band.

6. The multiplexer according to any one of claims 1 to 3, wherein a quantity of the at least one receive port is one, and the receive port is separately connected to the output end of the FDD receive filter and the second free end of the switch.

7. The multiplexer according to claim 6, wherein
the receive port is configured to receive an FDD receive signal output by the FDD receive filter; and
when the second free end of the switch is electrically connected to the fixed end, the receive port is further configured to receive the TDD receive signal output by the first TDD filter.

8. The multiplexer according to claim 4 or 5, wherein a quantity of the at least one receive port is one, and the receive port is separately connected to the output end of the FDD receive filter and the output end of the third TDD filter.

9. The multiplexer according to claim 8, wherein
the receive port is configured to receive an FDD receive signal output by the FDD receive filter; and
when the second free end of the switch is electrically connected to the fixed end, the receive port is further configured to receive the TDD receive signal output by the third TDD filter.

10. The multiplexer according to any one of claims 1 to 3, wherein the at least one receive port comprises an FDD receive port and a TDD receive port, the FDD receive port is connected to the output end of the FDD receive filter, and the TDD receive port is connected to the second free end of the switch.

11. The multiplexer according to claim 10, wherein
the FDD receive port is configured to receive an FDD receive signal output by the FDD receive filter; and
when the second free end of the switch is electrically connected to the fixed end, the TDD receive port is configured to receive the TDD receive signal output by the first TDD filter.

12. The multiplexer according to claim 4 or 5, wherein the at least one receive port comprises an FDD receive port and a TDD receive port, the FDD receive port is connected to the output end of the FDD receive filter, and the TDD receive port is connected to the output end of the third TDD filter.

13. The multiplexer according to claim 12, wherein
the FDD receive port is configured to receive an FDD receive signal output by the FDD receive filter; and
when the second free end of the switch is electrically connected to the fixed end, the TDD receive port is configured to receive the TDD receive signal output by the third TDD filter.

14. The multiplexer according to any one of claims 1 to 13, wherein a quantity of the at least one antenna port is one, and the antenna port is separately connected to the output end of the FDD transmit filter, the input end of the FDD receive filter, and the first TDD filter.

15. The multiplexer according to any one of claims 1 to 13, wherein the at least one antenna port comprises a first antenna port and a second antenna port, the first antenna port is connected to the output end of the FDD transmit filter and the input end of the FDD receive filter, and the second antenna port is connected to the first TDD filter.

16. The multiplexer according to any one of claims 1 to 13, wherein the at least one antenna port comprises a first antenna port and a second antenna port, the first antenna port is connected to the output end of the FDD transmit filter and the first TDD filter, and the second antenna port is connected to the input end of the FDD receive filter.

17. The multiplexer according to any one of claims 1 to 13, wherein the at least one antenna port comprises a first antenna port and a second antenna port, the first antenna port is connected to the output end of the FDD transmit filter, and the second antenna port is connected to the input end of the FDD receive filter and the first TDD filter.

18. The multiplexer according to any one of claims 1 to 17, wherein
the FDD transmit filter is configured to receive an FDD transmit signal output by the transmit port, suppress a signal outside an FDD transmit frequency band, and output the FDD transmit signal to the antenna port, wherein a frequency band of the FDD transmit signal is within the FDD transmit frequency band; and
the FDD receive filter is configured to receive an FDD receive signal input by the antenna port, suppress a signal outside an FDD receive frequency band, and output the FDD receive signal to the receive port, wherein a frequency band of the FDD receive signal is within the FDD receive frequency band.

19. A communication device, wherein the communication device comprises a transmit circuit, a receive circuit, an antenna system, and the multiplexer according to any one of claims 1 to 14, the transmit circuit is connected to a transmit port of the multiplexer, the receive circuit is connected to at least one receive port of the multiplexer, and the antenna system is connected to at least one antenna port of the multiplexer.

20. The communication device according to claim 19, wherein the antenna system comprises an antenna, a quantity of the at least one antenna port is one, and the antenna is connected to the antenna port.

21. The communication device according to claim 19, wherein the antenna system comprises a first antenna and a second antenna, the at least one antenna port comprises a first antenna port and a second antenna port, the first antenna is connected to the first antenna port, and the second antenna is connected to the second antenna port.
